# EUROPEAN PATENT APPLICATION

(11) **EP 3 133 756 A1**
(43) Date of publication of application: **22.02.2017**
(21) Application number: 16192435.2
(22) Date of filing: 12.09.2008
(51) Int. Cl.: H04J 14/08, H04J 3/04

(54) **HIGH-SPEED SERIALIZED RELATED COMPONENTS, SYSTEMS AND METHODS**

(30) Priority: 14.09.2007 US 972709 P
(62) Divisional of application: 08830563.6
(71) Applicant: Semtech Corporation, Camarillo, CA 93012 (US)
(72) Inventor: HORNBUCKLE, Craig, A., Torrance, CA 90505 (US); ROWE, David, A., Torrance, CA 90503 (US)
(74) Representative: Epping - Hermann - Fischer

(57) **Abstract**

A communication system includes a multiplexer configured to multiplex a first set of data channels into a first data channel and to multiplex a second set of data channels into a second data channel, and a delay adjuster configured to adjustably delay the first data channel based on a delay adjust command. The communication system also includes a first amplifier configured to amplify the delayed first channel into a first output data channel, and a second amplifier configured to amplify the second data channel into a second output data channel. The communication system further includes a first driver configured to convert the first output data channel into a first drive signal to drive an optical modulator, and a second driver configured to convert the second output data channel into a second drive signal to drive the optical modulator.

## Description

### FIELD

The subject technology generally relates to communication devices, and more particularly, relates to high-speed serializers, deserializers, related components, systems and methods for optical/electronic and wired/wireless communications.

### BACKGROUND

Recently, the world has witnessed a phenomenal growth in the number of Internet users, applications and devices and in the amount of data traffic especially that of medium-rich content- all demanding reliable high-speed, low-cost, low power consumption communication devices. The Internet utilizes fiber optic channels for ultra high speed communications. The optical signals sent along the fiber optic channels are received by receivers that include both optical components and electrical components. The receivers convert the optical signals to electrical signals and send the converted electrical signals to electronic computer networks operating at lower speeds for processing data. The transmitters, on the other hand, receive the electrical signals from electronic computer networks, convert them into optical signals and send them to the fiber optic channels.

These receivers and transmitters used in telecommunications applications may need to meet the optical standards that have emerged. One such standard is the Synchronous Optical Networks (SONET) which is a standard formulated by the Exchange Carriers Standards Association (ECSA) for the American National Standards Institute (ANSI). The SONET standard is used for telecommunications and other industries mainly in North America and Japan. Another standard is the Synchronous Digital Hierarchy (SDH) standard which was published by the International Telecommunication Union (ITU) and used in other parts of the world. The OC- 192 SONET standard or STM64 SDH Standard is for speeds at about 9-13 Gbps depending on error correction coding, and the OC-768 SONET standard or STM 256 SDH Standard is for speeds at about 36 to 48 Gbps.

In 1998, an industry-wide initiative was announced to create the Optical Internetworking Forum (OIF), an open forum focused on fostering the development and deployment of interoperable products and services for data switching and routing using optical networking technologies. To accelerate the deployment of optical networking technology and facilitate industry convergence on interoperability, the OIF identified, selected, and augmented as appropriate and published optical internetworking standards. Information regarding the OIF and publications by the OIF can be found at www.oiforum.com.

Accordingly, it would be desirable to be able to produce communication devices, and particularly serializers, deserializers, transmitters and receivers, that can satisfy the high-speed, high-performance, low-power communication needs demanded by the Internet and other multimedia communication applications while meeting the SONET/SDH standards and the OIF standards. It would be also desirable to produce such devices that are highly integrated and testable and cost-effective.

### SUMMARY

In one aspect of the disclosure, a communication system includes a multiplexer configured to multiplex a first set of data channels into a first data channel and to multiplex a second set of data channels into a second data channel, and a delay adjuster coupled to the multiplexer and configured to adjustably delay the first data channel based on a delay adjust command. The communication system also includes a first amplifier coupled to the delay adjuster and configured to amplify the delayed first channel into a first output data channel, and a second amplifier coupled to the multiplexer and configured to amplify the second data channel into a second output data channel. The communication system further includes a first driver coupled to the first amplifier and configured to convert the first output data channel into a first drive signal to drive an optical modulator configured to modulate one or more optical signals, and a second driver coupled to the second amplifier and configured to convert the second output data channel into a second drive signal to drive the optical modulator.

In a further aspect of the disclosure, a communication system includes a multiplexer configured to multiplex a first set of data channels into a first data channel and to multiplex a second set of data channels into a second data channel, and a constellation mapper configured to map the first and second data channels to an In-phase (I) - Quadrature (Q) constellation and to output an I data channel and a Q data channel based on the mapping. The communication system also includes a delay adjuster configured to adjustably delay the I data channel based on a delay adjust command. The communication system further includes a first digit-to-analog converter (DAC) configured to convert the delayed I data channel into a first analog data signal, and a second DAC configured to convert the Q data channel into a second analog data signal. The communication system further includes a first driver configured to convert the first analog data signal into a first drive signal to drive an optical modulator configured to modulate one or more optical signals, and a second driver configured to convert the second output data channel into a second drive signal to drive the optical modulator.

In yet a further aspect of the disclosure communication device includes an interface configured to receive input data channels and convert the input data channels into a first set of data channels and a second set of data channels, and a multiplexer configured to multiplex a first set of data channels into the first data channel and to multiplex the second set of data channels into a second data channel. The communication device also includes a delay adjuster coupled to the multiplexer and configured to adjustably delay the first data channel based on a delay adjust command. The communication device further includes a first amplifier coupled to the delay adjuster and configured to amplify the delayed first channel into a first output data channel, and a second amplifier coupled to the multiplexer and configured to amplify the second channel into a second output data channel. The communication device further includes a phase adjuster configured to adjustably phase shift a first clock based on a phase adjust command, and a clock amplifier configured to amplify the phase-shifted first clock into a first output clock.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

Figure Ia is a conceptual block diagram illustrating an example of a transmitter and a receiver in accordance with one aspect of the subject technology.
Figure Ib is a conceptual block diagram illustrating an example of a transmitter in accordance with one aspect of the subject technology.
Figure 2a is a conceptual block diagram illustrating an example of a transmitter in accordance with one aspect of the subject technology.
Figure 2b is an example of a timing diagram illustrating re-clocking of two data lanes at a modulator driver in accordance with one aspect of the subject technology.
Figure 2c is an example of a timing diagram illustrating pulse carving in accordance with one aspect of the subject technology.
Figure 2d is a conceptual block diagram illustrating a control system for the CMU/MUX block in accordance with one aspect of the subject technology.
Figure 2e is a conceptual block diagram illustrating a high-speed multiplexer architecture in accordance with one aspect of the subject technology.
Figure 2f is an example of a timing diagram illustrating a reset operation in accordance with one aspect of the subject technology.
Figure 2g is a conceptual block diagram illustrating an example of a transmitter in accordance with one aspect of the subject technology.
Figure 2h is a conceptual block diagram illustrating an example of a single-polarization transmitter for implementation of higher-order modulation in accordance with one aspect of the subject technology.
Figure 2i illustrates examples of constellations for various modulation schemes in accordance with one aspect of the subject technology.
Figure 2j illustrates an example of a predistorted constellation in accordance with one aspect of the subject technology.
Figure 2k is a conceptual block diagram illustrating an example of a dual-polarization transmitter for implementation of higher-order modulation in accordance with one aspect of the subject technology.
Figure 3 is a conceptual block diagram illustrating an example of a clock multiplier unit (CMU) and multiplexer (MUX) in accordance with one aspect of the subject technology.
Figure 4 is a conceptual block diagram illustrating an example of a high-speed MUX architecture in accordance with one aspect of the subject technology.
Figure 5 is a conceptual block diagram illustrating an example of a receiver in accordance with one aspect of the subject technology.
Figure 6 is a conceptual block diagram illustrating an example of a clock and data recovery (CDR) unit and demultiplexer (Demux) in accordance with one aspect of the subject technology.
Figure 7 is a conceptual block diagram illustrating an example of a high-speed multi-lane CDR architecture in accordance with one aspect of the subject technology.
Figure 8a illustrates a data eye pattern in accordance with one aspect of the subject technology.
Figure 8b is a conceptual block diagram illustrating a latch having an adjustable threshold and an adjustable phase in accordance with one aspect of the subject technology.
Figure 9 is a conceptual block diagram illustrating an example of a voltage-controlled oscillator (VCO) based CDR in accordance with one aspect of the subject technology.
Figure 10 is a conceptual block diagram illustrating an example of a delay-lock loop (DLL) based CDR in accordance with one aspect of the subject technology.
Figure 11 is a conceptual block diagram illustrating an example of a transmitter section having a multi-lane interface in accordance with one aspect of the subject technology.
Figure 12 is a conceptual block diagram illustrating an example of a transmitter section having a multi-lane interface in accordance with one aspect of the subject technology.
Figure 13 is a conceptual block diagram illustrating an example of a transmitter section having a multi-lane interface in accordance with one aspect of the subject technology.
Figure 14 is a conceptual block diagram illustrating an example of a transmitter section having a multi-lane interface in accordance with one aspect of the subject technology.

### DETAILED DESCRIPTION

The subject technology provides novel communication devices, and more particularly high-performance serializers, deserializers, and related components, that are highly integrated and testable and low in power consumption and cost.

For clarity, some of the terms used to describe the subject technology are defined as follows:
"Serdes" means a serializer and deserializer.
"Skew" means the constant portion of the difference in the arrival time between the data of any two in band signals.
"SFI" means the Serdes Framer Interface.
"SFI-5" means the Serdes Framer Interface Level 5 for the OC-768 system interface for physical layer devices. Documents relating to SFI-5 may include OIF2001.145.10, OIF2001.149.13, Implementation Agreement OIF-SFI5-01.0, and Implementation Agreement OIF-SPI5-01.1. The last two documents are available on the internet at www.oiforum.com.
"Unit Interval" or "UI" means one nominal bit period for a given speed. It is equivalent to the shortest nominal time between signal transitions.
"Wander" means the peak-to-peak variation in the phase of a signal (clock or data) after filtering the phase with a single pole low pass filter with the -3db point at the wander corner frequency.

In the figures, same reference numbers are used when referring to blocks or items that are the same or similar in functionality for ease of reference.

Now referring to Figure Ia, a simplified diagram of a transceiver is illustrated in accordance with one aspect of the subject technology. A transceiver may include a transmitter 130 and a receiver 120. On the transmitting side, electrical signals may be sent from a framer 106 to transmitter 130 which converts parallel data streams into a serial data stream and converts electrical signals to optical signals to be transmitted over optical fibers 112. On the receiving side, optical signals received from optical fibers 112 may be sent to receiver 120 which converts the optical signals to electrical signals and converts a serial data stream into parallel data streams. The output signals from receiver 120 may be sent to framer 106.

In accordance with one aspect of the subject technology, transmitter 130 may include (i) an interface stage 107 (e.g., a Transmit SFI-5 interface for an OC-768 system), (ii) a clock multiplier unit (CMU) and multiplexer (MUX) 108, (iii) a pre-driver 109, (iv) a modulator driver 1 10, and (v) an eletroabsorption modulator (EAM) 111. In accordance with one aspect of the subject technology, a Transmit SFI-5 interface 107 may receive multiple data channels (e.g., sixteen data channels from framer 106) and convert them into standard digital logic levels. Transmit SFI-5 interface 107 may derive a clock from the signals received from framer 106 and realign the data channels. CMU/MUX 108 receives the sixteen realigned data channels and multiplexes them up to a serial data channel. Transmitter 130 may include pre-driver 109 that can produce an output at an intermediate level (e.g., about 1.2V peak-to-peak). Modulator driver 110 boosts the intermediate level output signal to a higher level (e.g., about 3V peak-to-peak single ended signal) to drive the EAM which produces optical signals to be transmitted over optical fibers 112. It should be noted that in another configuration, some of the components may be combined or divided into separate parts, or eliminated.

In accordance with one aspect of the subject technology, receiver 120 may include (i) a photo detector 101, (ii) a trans-impedance amplifier (TIA) 102, (iii) a limiting amplifier 103, (iv) a clock and data recovery (CDR) unit and demultiplexer (Demux) 104, and (v) an interface stage 105 (e.g., a Receive SFI-5 interface). The optical signals sent along the optical fibers are detected and received by photo detector 101 and TIA 102. After photo detector 101 converts the optical signals to electrical current signals, TIA 102 converts the electrical current signals into electrical voltage signals and may amplify the signals at the same time. Limiting amplifier 103 may take an input with varying input voltages and convert it to a single high or low level. It makes amplitude decisions. CDR/Demux 104 may sample the data, quantize it in time and amplitude, and demultiplex it. It recovers the clock and data signals. The Demux may convert a serial data stream into parallel data streams. The CDR can perform with or without the limiting amplifier. If it receives an analog input that has not been operated on by a limiting amplifier, the sampler in the CDR can work at varying levels. Receive SFI-5 interface 105 may generate a reference channel and buffer the data so that the output data will be compatible with the logic and impedance levels and other characteristics required by the interface between receiver 120 and framer 106. It should be noted that in another configuration, some of the components may be combined or divided into separate parts, and/or eliminated.

Various components may be integrated into one single semiconductor chip. For the transmitter side, in accordance with one configuration, interface stage 107 and CMU/Mux 108 may be integrated into one single semiconductor chip. In another configuration, interface stage 107, CMU/Mux 108 and pre-driver 109 may be integrated into one single semiconductor chip. Yet in another configuration, pre-driver 109 and CMU/Mux 108 may be integrated into one semiconductor chip. In another configuration, interface stage 107, CMU/Mux 108, pre-driver 109 and modulator driver 110 may be integrated into one single semiconductor chip. In another example, CMU/Mux 108, pre-driver 109 and modulator driver 110 may be integrated into one single semiconductor chip. It should be noted that CMU/Mux 108 may be divided into CMU and Mux, and depending on the application, the Mux may be integrated with various components as described above.

On the receiver side, in accordance with one configuration, CDR/Demux 104 and interface stage 105 may be integrated into one semiconductor chip. In another configuration, limiting amplifier 103, CDR/Demux 104 and interface stage 105 may be integrated into one single semiconductor chip. Yet in another configuration, limiting amplifier 103 and CDR/Demux 104 may be integrated into one single semiconductor chip. In another configuration, TIA 102, limiting amplifier 103, CDR/Demux 104 and interface stage 105 may be integrated into one single semiconductor chip. In another example, TIA 102, limiting amplifier 103, and CDR/Demux 104 may be integrated into one single semiconductor chip. It should be noted that CDR/Demux 104 may be divided into CDR and Demux, and depending on the application, only CDR or only Demux may be integrated with various components as described above.

For transceivers, other integration methods may be possible. For instance, CMU/Mux 108 and CDR/Demux 104 may be integrated into one semiconductor chip with or without pre-driver 109 and limiting amplifier 103. In another example, interfaces 107 and 105, CMU/Mux 108 and CDR/Demux 104 may be integrated into one semiconductor chip with or without pre-driver 109 and limiting amplifier 103. Yet another example may integrate TIA 102, limiting amplifier 103, CDR/Demux 104, modulator 110, pre-driver 109 and CMU/Mux 108 into one chip or die. In another configuration, TIA 102, limiting amplifier 103, CDR/Demux 104, interface stage 105, modulator 110, pre-driver 109, CMU/Mux 108 and interface stage 107 may be integrated into one chip.

To produce a highly integrated chip, it will be helpful to utilize a fabrication process that can provide good yield and small geometry and high speed devices. For instance, SiGe BiCMOS may be utilized, but the fabrication process is not limited to SiGe BiCMOS. To integrate various components into a chip, it may be beneficial, by way of example and not by way of limitation, to provide differential input/output lines to various components (for example, to provide field cancellation), a flip-chip configuration (e.g., Ball Grid Array), isolation trenches, and low temperature ceramic packages. If EAM 111 includes differential inputs rather than a single ended input, it will reduce the required single-ended output voltage level at the stage prior to EAM 1 11 to one-half of the voltage required for a single ended input. This also helps integration. Providing balanced differential photo detectors or photo diodes will be also helpful.

Figure Ib is a conceptual block diagram illustrating an example of a transmitter in accordance with one aspect of the subject technology. A transmitter 151 is shown with two CMU/MUXs 162. A transmitter may include one or more CMU/MUXs (i.e., k-number of CMU/MUXs, where k is an integer greater than zero). A CMU/MUX 162 can be fabricated using SiGe. Alternatively, CMOS, BiCMOS or other suitable material(s) may be used to fabricate a CMU/MUX 162. Each CMU/MUX 162 is on the data source side and is coupled to a driver block 152 through a multi-lane interface 157A and 157B. An interface may include coaxial cable(s), connector(s), or any other suitable type of connections.

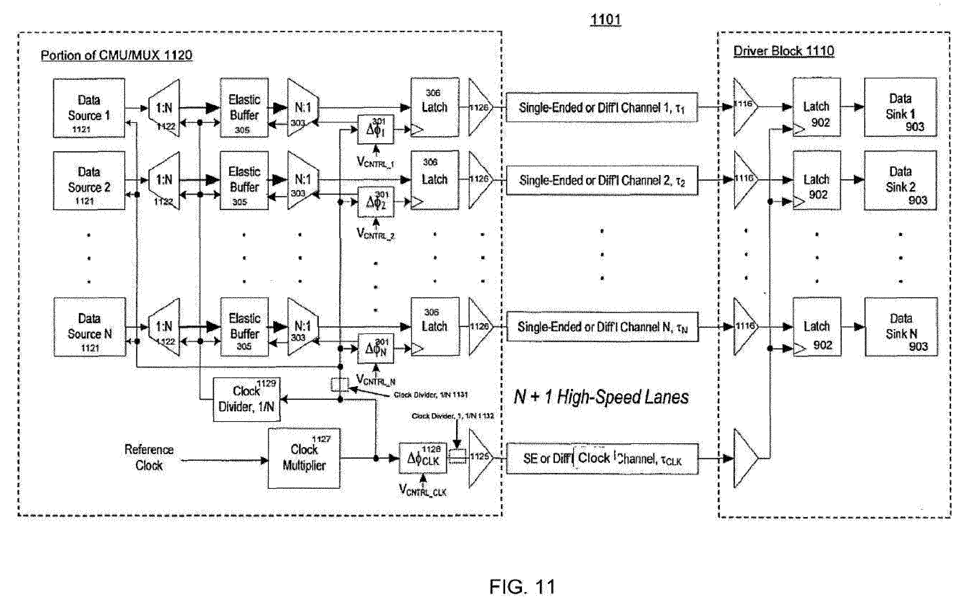

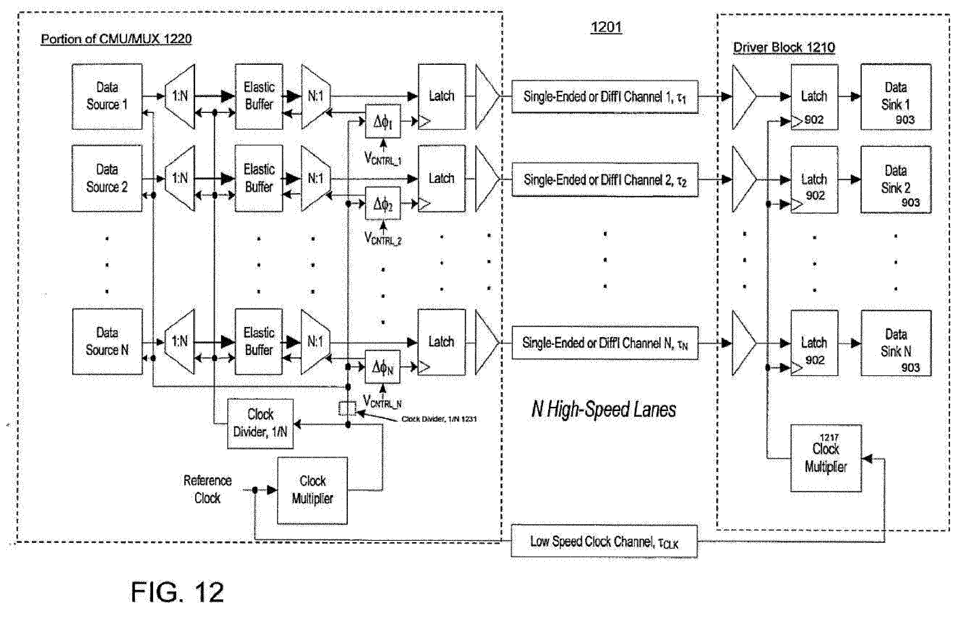

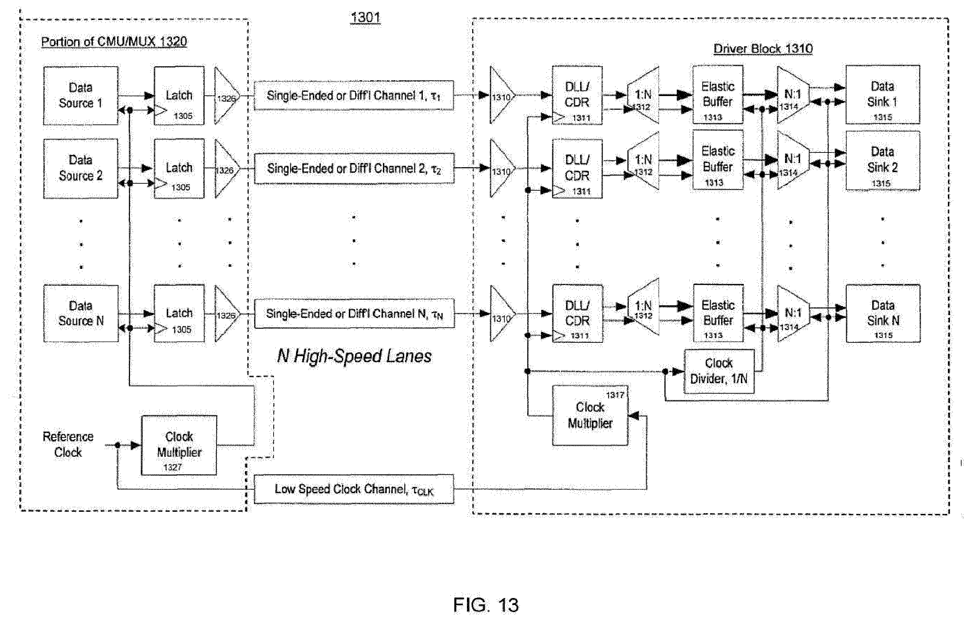

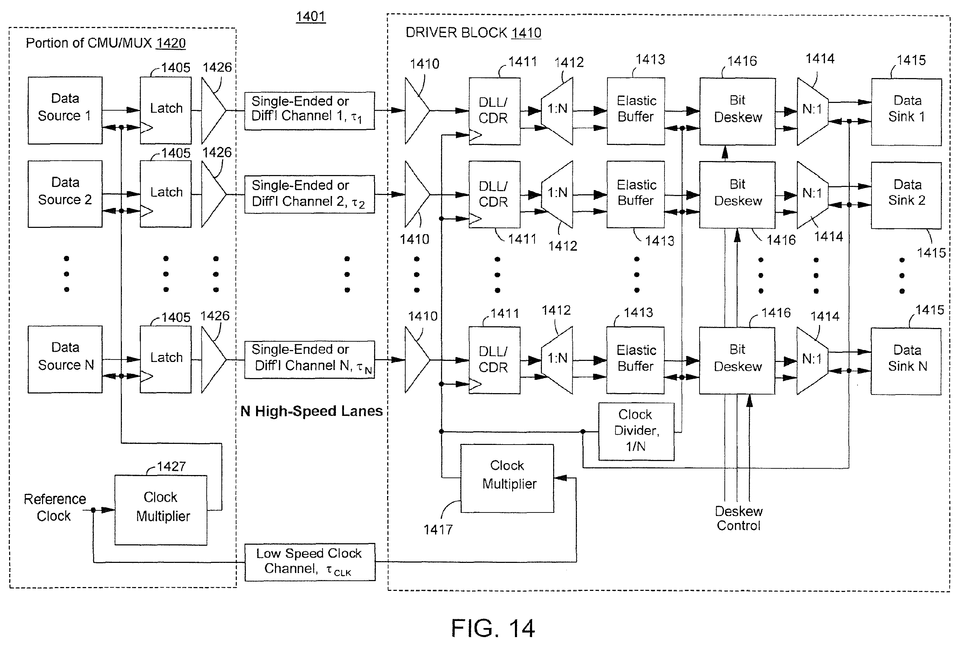

A driver block 152 can be fabricated using GaAs or InP. Alternatively, it can be fabricated using SiGe or other suitable material(s). A driver block may include latches and data sinks (see, e.g., latches 902 and data sinks 903, as shown in Figures 11 and 12). Alternatively, a driver block may include delay lock loop (DLL) based CDR' s 131 1, 1 :N Demux's 1312, elastic buffers 1313, N: l Mux's 1314 and data sinks 1315, as shown in Figure 13, or delay lock loop (DLL) based CDR's 1411, 1:N Demux's 1412, elastic buffers 1413, bit deskew units 1416, N:l Mux's 1414 and data sinks 1415, as shown in Figure 14. In another configuration, a driver block may include other suitable circuitry. Data sinks can be implemented, for example, using driver amplifiers.

Referring back to Figure Ib, each driver block 152 is on the data sink side and is coupled to an optical modulator such as an optical differential quadrature phase-shift keying (DQPSK) modulator 154. Each optical DQPSK modulator 154 receives a signal from a power splitter 160 and is coupled to a pulse carver 156. The outputs from both pulse carvers 156 are transmitted to a polarization combiner 158. A CMU/MUX 162 may output one or more data outputs such as TXDATAOUT[O] and TXDATAOUT[I]. It may also output one or more high-speed clock signals such as HSCLK[0]P/N and HSCLK[I ]P/N.

A CMU/MUX may include one or more lanes (e.g., n-number of lanes where n is an integer greater than zero). A lane is sometimes referred to as a channel. When data arrives at a driver block 152, data on each lane may not be aligned to each other due to the variations in the data path. Driver blocks 152 can realign such data. It should be noted that a transmitter may include only some of the components shown in Figure Ib or include additional components.

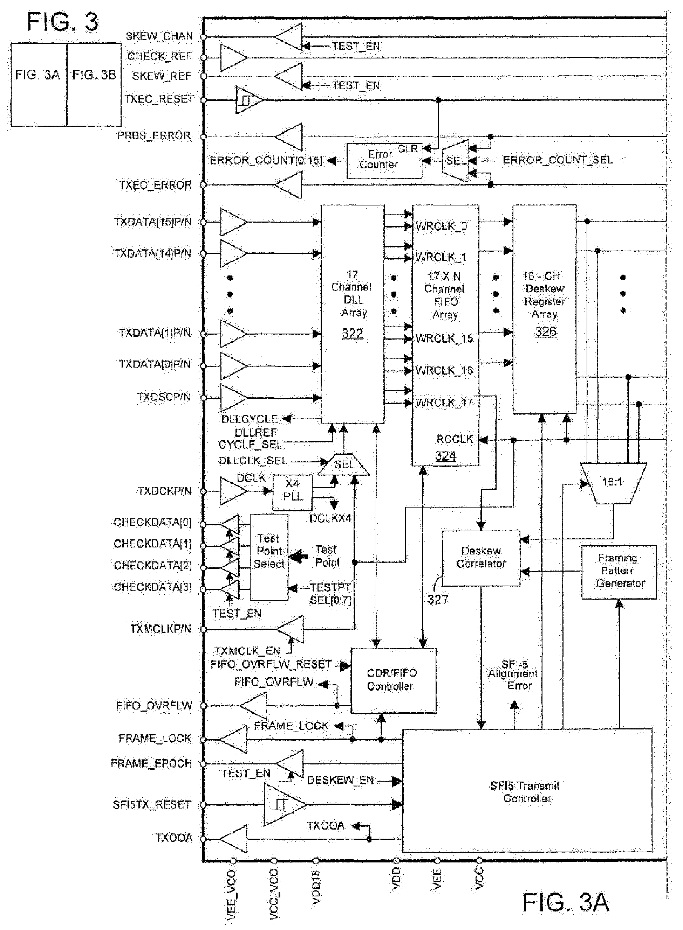

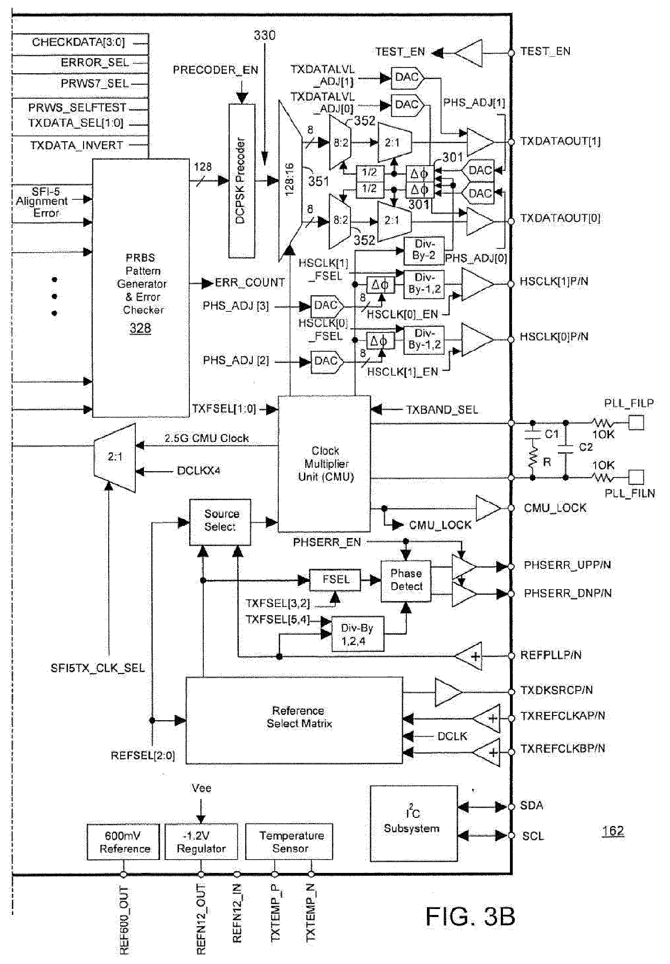

Figure 3 is a conceptual block diagram illustrating an example of a clock multiplier unit (CMU) and multiplexer (MUX) in accordance with one aspect of the subject technology. The data rate of a CMU/MUX shown in Figure 3 can be, for example, 30-60 Gbps (e.g., about 56 Gbps, 39 to 45 Gbps, 39 to 41 Gbps, 42 to 45 Gbps). It uses 2 lanes; thus the data rate of each lane is a half of the data rate of the CMU/MUX. When multiple CMU/MUX's are utilized, the data rate can be increased. For example, if two CMU/MUX's are utilized (see, e.g., Figure Ib), then the data rate can be doubled (e.g., to about 112 Gbps, if the data rate of a single CMU/MUX is 56 Gbps). If n-number of CMU/MUX's is utilized in parallel, then the data rate can be increased by n-times the data rate of a single CMU/MUX. In addition or alternatively, the data rate can be increased by increasing the number of lanes or channels within a CMU/MUX. Figure Ib illustrates two lanes per CMU/MUX as an example.

The CMU/MUX may include a client-side interface that receives parallel data channels TXDATA[0]P/N - TXDATA[15]P/N, aligns the received data channels to a common clock domain and performs bit deskew on the clock-aligned data channels, e.g., according to the SFI-5 standard. The CMU/MUX may include a Channel DLL Array 322 that is configured to output a data channel and clock for each received data channel, where the clock is aligned with the corresponding data channel. The CMU/MUX may also include a Channel FIFO Array 324 configured to align the data channels from the Channel DLL Array 322 to a common local clock. The CMU/MUX may also include a Deskew Register Array 326 configured to align the data bits of the data channels from the Channel FIFO Array 324. To perform bit deskewing, the CMU/MUX may receive a reference channel TXDSCP/N comprising samples of each data channel, and correlate each of the data channels with the corresponding sample from the reference channel using a deskew correlator 327 to determine the amount (number of bits) that each data channel needs to be shifted to align their data bits. The Deskew Register Array 326 may then shift the data channels to align their data bits. The CMU/MUX may also include Psuedo Radom Bit Sequence (PRBS) Pattern Generator and Error Checker 328 to generate a pseudo-random pattern, which can be compared with a pseudo-random pattern in data channels to perform error checker on the data channels. A more detailed discussion of an exemplary client-side interface of a CMU/MUX may be found in U.S. Patent No. 7,286,572 titled "HIGHLY INTEGRATED, HIGH-SPEED, LOW-POWER SERDES AND SYSTEMS," issued on October 23, 2007, the entire specification of which is incorporated herein by reference.

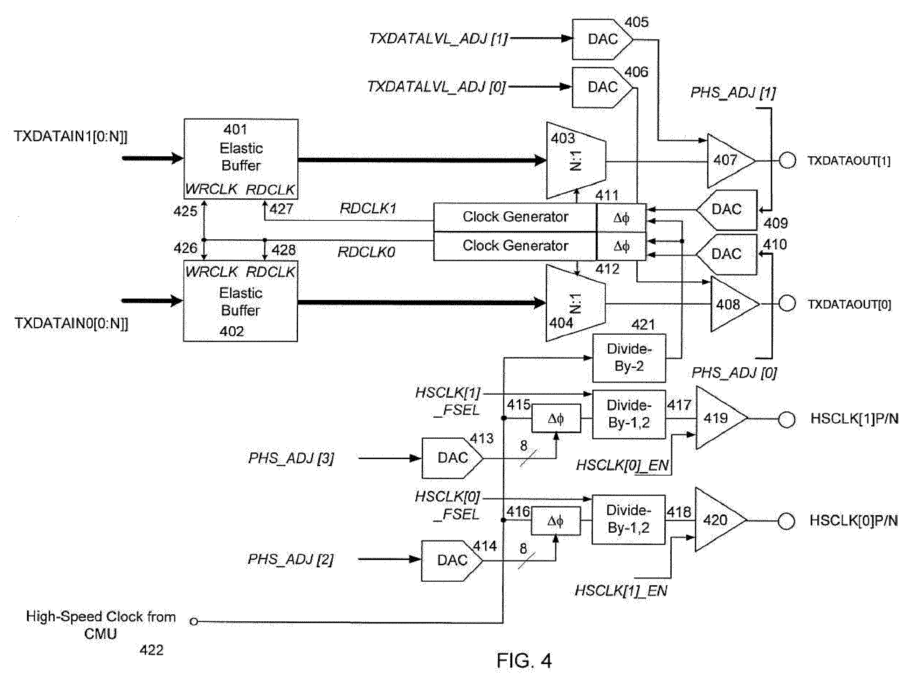

A high-speed MUX architecture (shown in the top-right portion of Figure 3) is illustrated in Figure 4 in detail. This MUX architecture utilizes preskew control on data and clocks. Elastic buffers 401 and 402 (shown in Figure 4) may be coupled to data source 330 (shown in Figure 3). Elastic buffers 401 and 402 may be included in MUX's 351 and 352 (shown in Figure 3). According to one aspect, an elastic buffer is implemented using a first-in-first-out (FIFO) buffer.

The subject technology may utilize one or more clock phase adjusters such as clock phase adjusters 41 1 and 412 (shown in Figure 4). Each clock phase adjuster can be adjusted independently of the other(s). An output of each clock phase adjuster 411 and 412 can be provided to a MUX 403 and 404 and an elastic buffer 401 and 403 (shown in Figure 4). A high-speed clock 422 from CMU runs at the baud rate (or the data rate of each lane). A divide-by-2 421 reduces the clock rate of the clock 422 by 2 (or half the data rate). The divide-by-2 may be used for a half-rate system in which both clock edges are used to multiplex the data. For a system using a full-rate clock, the divide-by-2 421 may be omitted. Divide-by-1 or 2's 417 allow the clock to run at full rate or half rate. Typically, one of the divide-by-1 or 2's runs at full rate, and the other runs at half rate. Each of TXDATAOUT[0] and TXDATAOUT[I] is at the data rate (or full rate).

Referring to Figure 4, the inputs to the elastic buffers 401 and 402 may comprise data words TXDATAINO [0:N] and TXDATAINl [0:N], which may be provided by a preceding bit-level preskew block of the CMU/MUX block. The elastic buffers 401 and 402 each have write input clocks 425 and 426 and read input clocks 427 and 428. In this aspect, the write input clock 425 and 4261s from a common clock domain whereas the read clocks 427 and 428 are from separate clock domains, hi the example in Figure 4, RDCLK1 provides the read clock 427 to elastic buffer 401 and RDCLKO provides the read clock 428 to elastic buffer 402. The write clock 425 and 426 for both elastic buffers 401 and 402 is provided by RDCLKO. These clocks are provided by the phase shifter/clock generator blocks 411 and 412. Each phase shifter/clock generator blocks 411 and 412 receives a clock, applies an adjustable phase shift to the clock, and outputs the phase-shifted clock and sub-harmonics of the phase-shifted clock which are used in the multiplexing operations of the respective multiplexer 403 and 404 as well as by the elastic buffers 401 and 402.

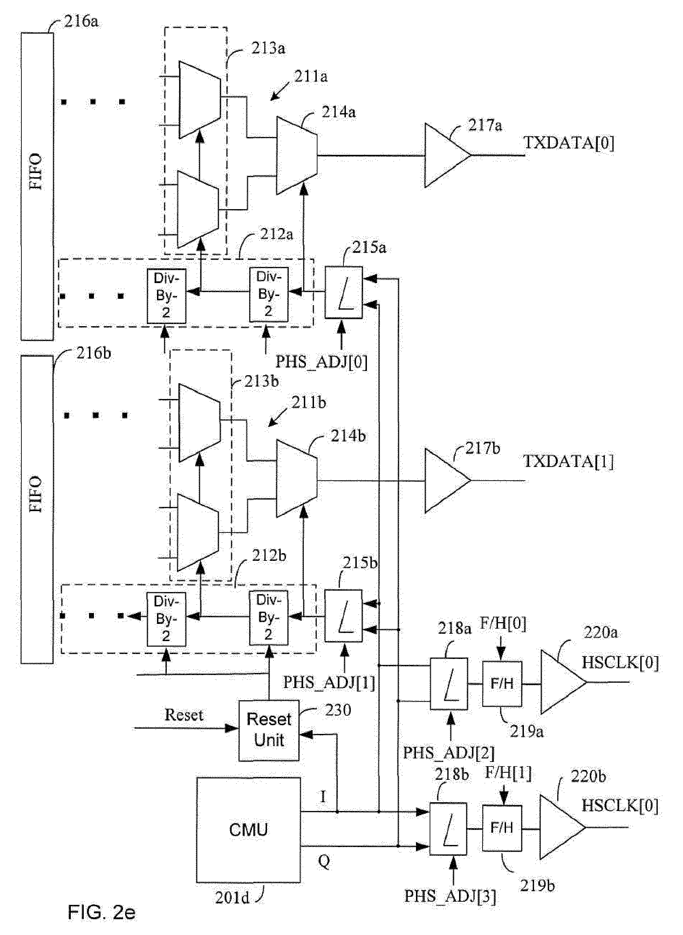

The outputs of the elastic buffer 401 and 402 are provided to the N: 1 multiplexer blocks 403 and 404, which converts the outputs of each elastic buffer 401 and 402 into a high-speed data channel using sequential multiplexing operations. The clocks for these multiplexing operations are provided by phase shifter/clock generator blocks 411 and 412. An example of sequential multiplexing operations is discussed below with reference to Figure 2e below.

The multiplexers 403 and 404 provide the high-speed data channels to amplifiers 407 and 408. These amplifiers 407 and 408 may provide adjustable output amplitudes that are controlled through DACs 405 and 406, which convert the digital control words TXDATALVL_ADJ[0] and TXDATALVL_ADJ[1] into analog control signals that control the gains of the amplifiers.

The system in Figure 4 generates high-speed data channels TXDATAOUT[O] and TXDATAOUT[I] that have independently adjustable skew relative to one another as well as relative to the two high-speed clocks which are labeled HSCLK[0]P/N and HSCLK[0]P/N in Figure 4. The skew of the high-speed data channels TXDATAOUT[O] and TXDATAOUT[I] is adjusted based on digital control signals PHS ADJ[O] and PHS_ADJ[1], respectively. These digital control signals are inputted to digital-to-analog converters (DACs) 409 and 410, which convert the digital control signals into analog control signals that control the clock phase shifts induced by phase shifter/clock generator blocks 411 and 412.

The two high-speed clocks, HSCLK[0]P/N and HSCLK[1]P/N have independently adjustable phases which are adjusted by phase adjusters 415 and 416 based on the digital control signals PHS_ADJ[2] and PHS_ADJ[3], respectively. The control signals PHS_ADJ[2] and PHS_ADJ[3] are provided to DACs 413 and 414, which convert the digital control signals into analog control signals that control the phase shifts induced by phase adjusters 415 and 416. The high-speed clocks which are the inputs to phase adjusters 415 and 416 are from the CMU (shown in Figure 3). The phase shifted clocks are provided to blocks 417 and 418, which provide an optional divide-by-2 function that allows the clock signals HSCLK[0]P/N and HSCLK[I ]P/N to operate at a frequency of one-half the baud-rate of TXDATAOUT[O] and TXDATAOUT[I] or, at the full baud-rate of these signals TXDATAOUT[O] and TXDATAOUT[I]. The selection of these rates is provided by control signals HSCLK[0]_FSEL and HSCLK[I ]_FSEL. The HSCLK[0]P/N and HSCLK[I ]P/N are then amplified by driver amplifiers 419 and 420, which may have independent enable inputs HSCLK[0] EN and HSCLK[I ]_EN to allow the high-speed clock outputs to be powered down when not in use.

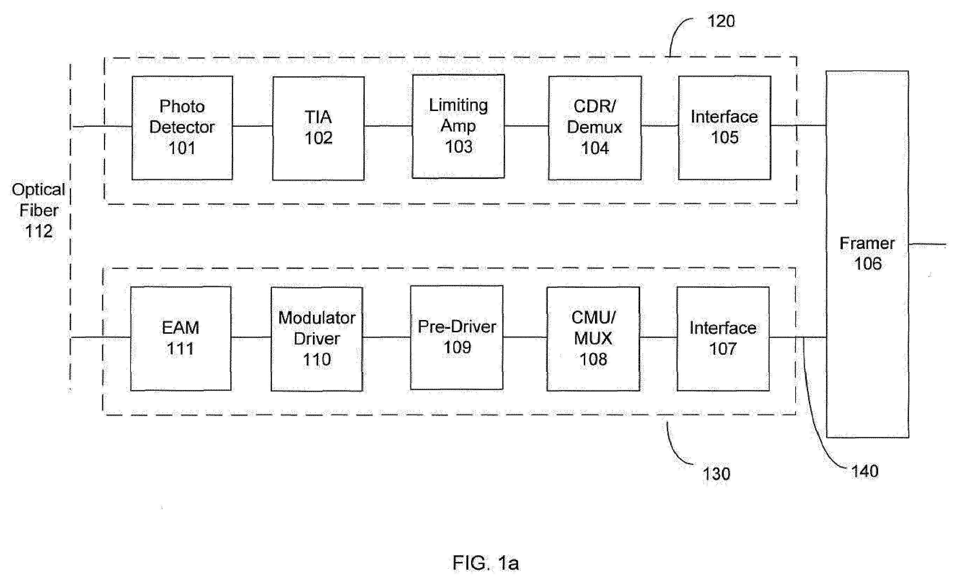

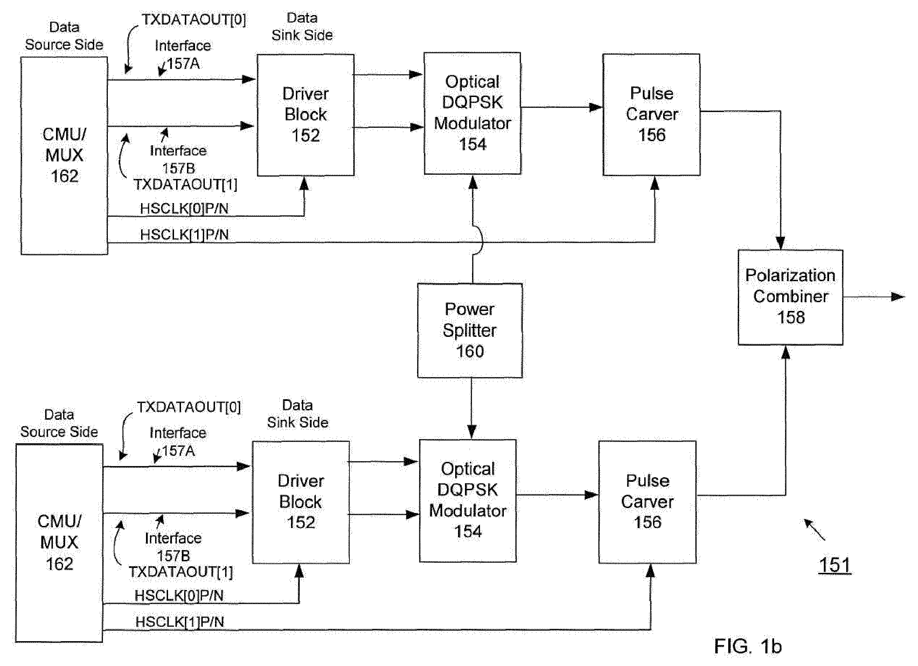

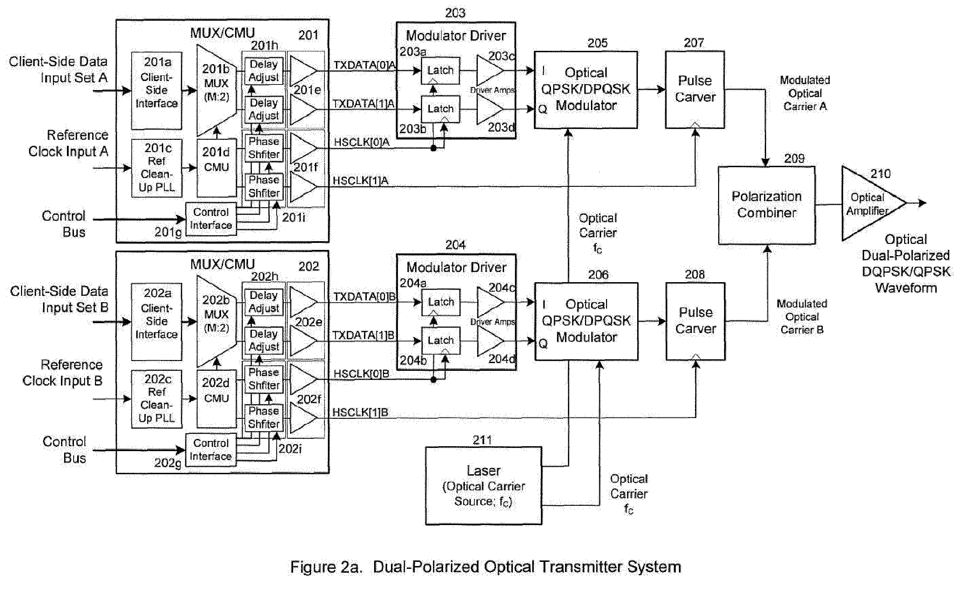

Figure 2a is a conceptual block diagram illustrating an example of a transmitter system in accordance with one aspect of the subject technology. The transmitter system in the example shown in Figure 2a comprises two CMU/MUX blocks 201 and 202, two modulator drivers 203 and 204, two optical modulators 205 and 206, two pulse carvers 207 and 208, a polarization combiner 209, and an optical amplifier 210.

Each CMU/MUX block 201 and 202 may be configured to receive client-side data that comprises M-lanes of digital data (e.g., 16 lanes of digital data) at a baud rate of fA, and multiplex the received client-side data into two high-speed data lanes TXDATA[0] and TXDATA[1] at a baud rate of fB. A data lane may also be referred to as a data channel. The baud rate fβ of each high-speed data lane may be M/2 times faster than the baud rate fA of the client-side data. In Figure 2a, signals associated with CMU/MUX block 201 are designated by the letter A and signals associated with CMU/MUX block 202 are designated by the letter B.

Each CMU/MUX block 201 and 202 may also precode the received data using QPSK or DPQSK modulation, in which case the high-speed data lane TXDATA[0] may correspond to the in-phase (I) data and the high-speed data lane TXDATA[1] may correspond to the quadrature (Q) data. The two high-speed data lanes TXDATA[0] and TXDATA[1] are inputted to the respective modulator driver 203 and 204. Each CMU/MUX block 201 and 202 may be coupled to the respective modulator driver 203 and 204 through a multi-lane interface. An interface may include coaxial cable(s), connector(s), or any other suitable type of connections.

Each modulator driver 203 and 204 may be configured to amplify the respective two high-speed data lanes into two high-level drive signals. The two high-level signals are inputted to the I and Q modulation input ports of the respective optical modulator 205 and 206. Each optical modulator 205 and 206 receives optical carrier signals from a laser 21 1 and independently phase-modulates the optical carrier signals using the I and Q input signals. The two modulated optical carriers are then combined in quadrature to form the resulting QPSK or DQPSK optical carrier signal outputted by the respective optical modulator 205 and 206. The modulated optical carrier signal is then inputted to the respective pulse carver 207 and 208, which may be configured to narrow the modulation pulses of the optical carrier signal to reduce susceptibility to polarization mode dispersion, as explained further below. The two modulated optical carrier signals from the pulse carvers 207 and 208 are inputted to the polarization combiner 209. The polarization combiner 209 may be configured to combine the two modulated optical carrier signals by placing the signals on orthogonal polarizations. The resulting combined dual-polarized signal may then be amplified by the optical amplifier 210 and launched onto an optical fiber, which may transport the signal to a receiver, e.g., located 40 to 1500 km away.

Each CMU/MUX block 201 and 202 comprises a client-side interface 201 a and 202a, a multiplexer 201b and 202b, two delay adjusters 201h and 202h, and two data amplifiers 201e and 202e. Each CMU/MUX block further comprises a clean-up phase lock loop (PLL) 201c and 202c, a clock multiplier unit (CMU) 201d and 202d, two phase shifters 201i and 202i, two clock amplifiers 201f and 202f, and a control interface 202g and 202g.

The client-side interface 201a and 202a in each CMU/MUX block 201 and 202 receives M-lanes of client-side data (e.g., 16 lanes of data). The client-side interface 201a and 202a may perform data and clock recovery on the received M-lanes of data, synchronize the M-lanes of data to a common clock domain (e.g., using first-in first-out (FIFO) buffers), and deskew the M-lanes of data to align their data bits. These operations may be performed in accordance with the SFI-5 standard for an OC-768 system. The client-side interface 201a and 202a may also precode the data using QPSK or DQPSK modulation. The multiplexer 201b and 202b multiplexes the processed data from the client-side interface 201a and 202a into two high-speed data lanes. Each high-speed data lane may operate at a baud rate fB that is M/2 times faster than the baud rate fA of the client-side data. In one aspect, the client-side interface 201a and 202a may also demultiplex the client-side data by Mx1 :N to facilitate parallel digital processing in the client-side interface 201a and 202a. In this example, the client-side interface 201a and 202a may output NxM lanes of data to the multiplexer 201b and 202b, which multiplexes the NxM lanes of data into the two high-speed data lanes.

The two high-speed data lanes from the multiplexer 201b and 202b are inputted to the two delay adjusters 201h and 202h, which may be configured to independently adjust the delays of the two data lanes. The two high-speed data lanes may then be amplified by the two data amplifiers 201e and 202e to a desired voltage swing and outputted as high-speed data lanes TXDATA[0] and TXDATA[1]. The control interface 201g and 202g may control the amount of delay applied to each high-speed data lanes by the respective delay adjuster 201h and 202h based on a delay adjust command from the control interface 201g and 202g. The delay adjusters 201h and 202h may be used to delay (skew) the two high-speed data lanes TXDATA[0] and TXDATA[1] relative to each other to compensate for different delays in the data paths between the CMU/MUX block 201 and 202 and the modulator driver 203 and 204. Thus, the two high-speed data lanes may be adjustably delayed (skewed) with respect to each other at the CMU/MUX block 201 and 202 to provide closer alignment of the two data lanes at the input of the modulation driver 203 and 204 when they undergo different delays in the interface between the CMU/MUX block 201 and 202 and the modulation driver 203 and 204. The desired delay between the two data lanes at the CMU/MUX block 201 and 202 may be determined, e.g., by measuring a delay difference between two signals at the input of the modulator driver 203 and 204 after crossing the interface between the CMU/MUX block 201 and 202 and the modulator driver 203 and 204, and computing the amount of delay between the two signals at the CMU/MUX block 201 and 202 needed to compensate for the delay difference. In the CMU/MUX block 201 and 202, one of the delay adjusters 201h and 202h may be omitted while still providing adjustable delay between the two high-speed data channels at the CMU/MUX block 210 and 202.

The clean-up PLL 201c and 202c receives a reference clock and cleans up the reference clock, e.g., to reduce jitter and phase noise in the reference clock. The clean-up PLL 201c and 202c may output the cleaned reference clock at the same frequency as the input reference clock or scale the frequency of the input reference clock by a factor defined as a ratio of integers K/R. The cleaned reference clock is provided to the CMU 201d and 202d. The CMU 201d and 202d may frequency multiply the cleaned reference clock to produce to high-speed clock to time the multiplexing operations of the multiplexer 201b and 202b. This clock may be frequency divided in the multiplexer 201b and 202b into a series of clocks that are sub-harmonically related to the baud rate fβ of the high-speed data lanes TXDATA[0] and TXDATA[1]. An example of this is discussed with reference to Figure 2e below. The CMU 201d and 202d also frequency multiplies the cleaned reference clock to provide two high-speed clocks which may operate at the output baud rate fB or a sub-harmonic of that rate (e.g., one-half or one-quarter of fB). The two high-speed clocks may be independently phase shifted by the two phase shifters 201i and 202i, amplified by the two clock amplifiers 201f and 202 f, and outputted from the CMU/MUX block 201 and 202 as high-speed clocks HSCLK[0] and HSCKL[1]. The control interface 201g and 202g may control the phase shift applied to each high-speed clock HSCLK[0] and HSCKL[1] by the respective phase shift based on a phase adjust command. The high-speed clock HSCLK[0] goes to the respective modulator driver 203 and 204, and the high-speed clock HSCLK[1] goes to the respective pulse carver 207 and 208.

Each modulator driver 203 and 204 comprises two latches 203a,b and 204a,b and two driver amplifiers 203c,d and 204c,d. The two latches 203a,b and 204a,b latch data from the two high-speed data lanes TXDATA[0] and TXDATA[1] based on the high-speed clock HSCLK[0]. The latched data is then amplified to a desired drive level by the drive amplifiers 203c,d and 204c,d to drive the optical modulator 205 and 206. The high-speed clock HSCLK[0] is inputted to both latches 203a,b and 204a,b so that they latch data from the two high-speed data lanes TXDATA[0] and TXDATA[1] on a common clock (i.e., HSCLK[0]). Thus, the two latches 203a,b and 204a,b re-clock the two high-speed data lanes TXDATA[0] and TXDATA[1] using a common clock (i.e., HSCLK[0]).

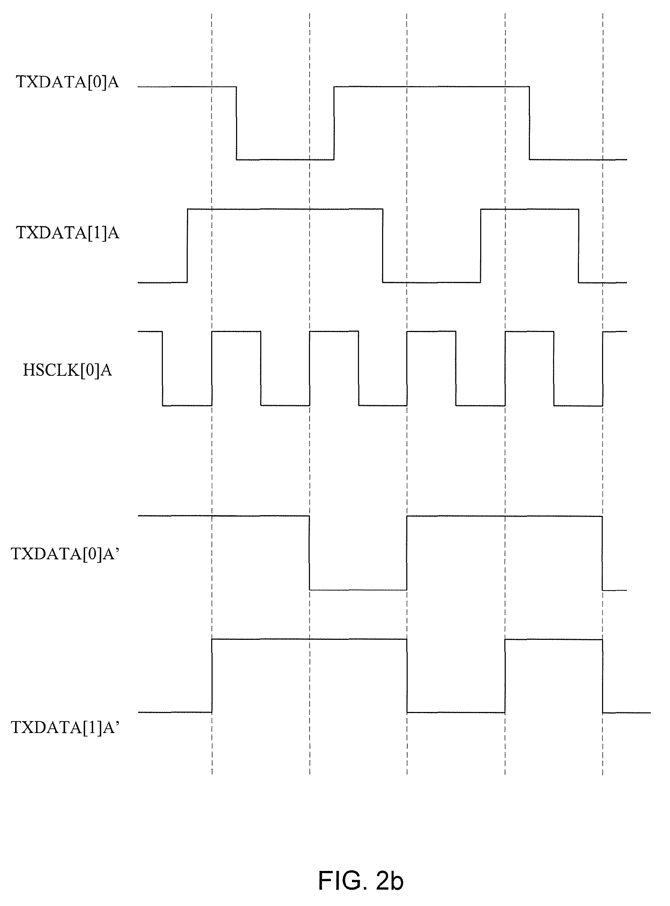

Figure 2b shows an example of a timing diagram illustrating timing of the two data lanes TXDATA[0] and TXDATA[1] at the inputs of the latches 203a,b and 204a,b before latching and the high-speed clock HSCLK[0]. In this example, the two data lanes TXDATA[0] and TXDATA[1] are slightly out of alignment. At each rising edge of the high-speed clock HSCLK[0], the data bit levels of the two data lanes are latched by the two latches 203a,b and 204a,b. The two data lanes TXDATA[0]' and TXDATA[1]' after latching are aligned with the clock HSCLK[0] as shown in the example in Figure 2b. In this example, the high-speed clock HSCLK[0] operates at the baud rate fβ of the highspeed data lanes TXDATA[0] and TXDATA[1]. The high-speed clock HSCLK[0] may also be sent to the modulator driver 203 and 204 at a sub-harmonic of the baud rate fβ and then frequency multiplied to the baud rate fβ at the modulator driver 203 and 204 to clock in data at the latches. The high-speed clock HSCLK[0] may be phase adjusted by the phase adjuster 201i and 202i to optimize sampling of the two data lanes TXDATA[0] and TXDATA[1]. For example, the high-speed clock HSCLK[0] may be phase adjusted so that a rising edge of the clock HSCLK[0] occurs when both data lanes TXDATA[0] and TXDATA[1] have valid data. In the example shown in Figure 2b, the rising edge of the clock HSCLK[0] is aligned in the middle of the data edges of the two data lanes TXDATA[0] and TXDATA[1].

The optical modulator 205 and 206 may require close alignment of the I and Q input signals. For example, the alignment requirement may be 1/10 of a symbol or better. For a data rate of approximately 25 giga symbols per second, this may translate into an alignment requirement of ± 4 pico seconds between the I and Q input signals. In one aspect, the modulator driver 203 and 204 is positioned near the optical modulator 205 and 206 so that close alignment of the two data lanes TXDATA[0] and TXDATA[1] at the modulator drivers 203 and 204 provides close alignment of the I and Q input signals to the optical modulator 205 and 206. As discussed above, the two data lanes TXDATA[0] and TXDATA[1] may be aligned at the input of the modulator driver 203 and 204 by adjusting the relative delay between the two data lanes at the CMU/MUX block 201 and 202 to compensate for different delays in the interface between the CMU/MUX block 201 and 202 and the modulator driver 203 and 204. This relaxes the alignment requirements for the interface between the CMU/MUX block 201 and 202 and the modulator driver 203 and 204. The latches 203a,b and 204a,b may provide additional alignment at the modulator driver 203 and 204 by re-clocking the two data lanes using a common clock (i.e., HSCLK[0]). The delay adjusters and/or latches may be omitted from the transmitter system, e.g., depending on the alignment requirements of the optical modulator and/or the amount of misalignment of the two data lanes in going across the interface between the CMU/MUX block and the modulator driver. In the example where the latches are omitted, the high-speed clock HSCLK[0] may also be omitted.

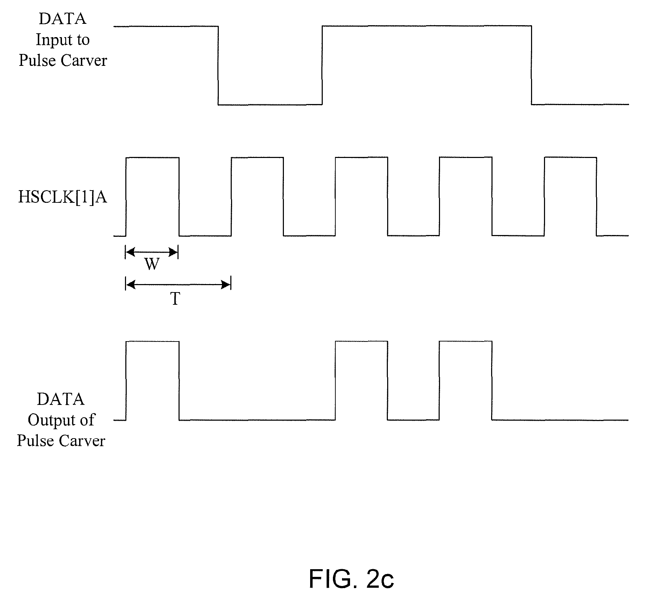

Each pulse carver 207 and 208 narrows the modulation pulses of the optical carrier signal from the respective optical modulator 205 and 206 by gating the optical carrier signal. In one aspect, the high-speed clock HSCLK[1] is inputted to the pulse carver 207 and 208. The pulse carver 207 and 208 narrows the modulation pulses of the optical carrier signal by passing the modulation pulses when the high-speed clock HSCKL[1] is high and attenuating the modulation pulses when the high-speed clock HSCLK [1] is low. An example of this is shown in Figure 2c, which shows a timing diagram of modulation pulses input to the pulse carver 207 and 208 and the high-speed clock HSCLK[1]. In this example, the high-speed clock HSCLK[1] is high for a time width W during each clock period T. During each clock period T, the pulse carver 207 and 208 passes the corresponding modulation pulse for the time width W while attenuating the modulation pulse for the rest of the clock period T. This operation narrows the modulation pulses output from the pulse carver 207 and 208 as shown in Figure 2c.

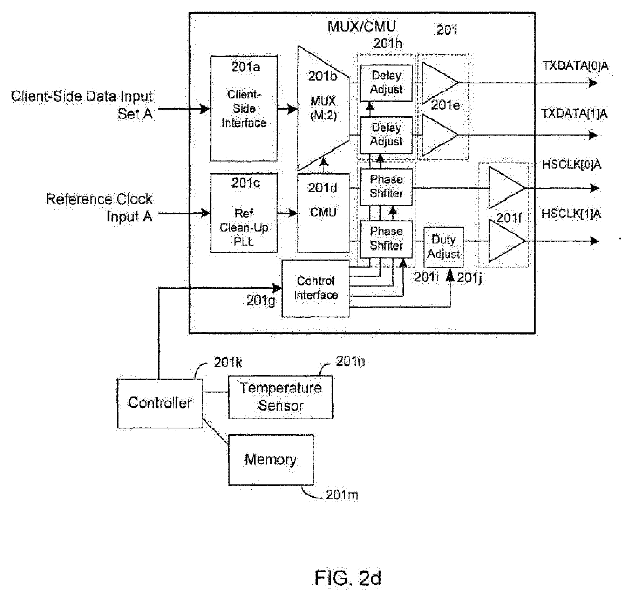

The high-speed clock HSCLK[1] may be phase adjusted by the phase shifter 201i and 202i to optimally "carve" (time window sample) the modulation pulses of the optical carrier signal at the pulse carver. The high-speed clock HSCKL[1] may also have a variable duty cycle W/T to adjust the width of the narrowed modulation pulses. Figure 2d shows an example of a duty cycle adjuster 201j between the phase shifter 201i and the clock amplifier 201f. The duty cycle adjuster 201j may vary the duty cycle of the clock HSCKL[1], e.g., between 0.25 and 0.75, based on a duty cycle adjust command from the control interface 201g. Narrowing the modulation pulses reduces susceptibility to polarization mode dispersion at the expense of less data symbol energy.

As discussed above, each pulse carver reduces susceptibility of the optical carrier signal to polarization mode dispersion in the optical fiber. Polarization mode dispersion may occur when a portion of the energy of an optical carrier signal on one polarization transfers to another polarization, propagates at a slightly different velocity in the other polarization, and transfers back to the original polarization. Polarization mode dispersion may cause the modulation pulses to spread into one another resulting in inter-symbol interference. Narrowing the modulation pulses increases the space between the modulation pulses in the optical carrier signal allowing the modulation pulses to spread more without spreading into one another.

Figure 2d is a conceptual block diagram illustrating an example of a control system coupled to the control interface 201g of the CUM/MUX block 201 in accordance with one aspect of the subject technology. The control system comprises a controller 201k, memory 201m and one or more temperature sensors 201n. In one aspect, the memory 201m may store delay adjusts for the two data lanes TXDATA[0] and TXDATA[1]. The delay adjusts may be determined, e.g., by measuring a delay difference in the data paths between the CMU/MUX block 201 and the modulator driver 203 and computing delay adjusts that compensate for the delay difference. In one aspect, a plurality of delay adjusts may be determined for different temperatures and stored in a lookup table in memory 201m. In this aspect, the controller 201k may receive a temperature reading from one of the temperature sensors 201n, look up delay adjusts corresponding to the temperature reading in the lookup table, and send corresponding delay adjust commands to the control interface 201g of the CMU/MUX block 201. In this aspect, one or more of the temperature sensors 201m may be located at or near the CMU/MUX block 201 or the modulator driver 203. Although the control system is shown for CMU/MUX block 201 in Figure 2d, a similar control system may be coupled to CMU/MUX 202.

The phase adjust for the high-speed clock HSCLK[0] may be determined, e.g., by finding a phase adjust that aligns the rising edge of the clock HSCLK[0] in the middle of two data edges of the two data lanes TXDATA[0] and TXDATA[1] at the modulator driver. In one aspect, a plurality of phase adjusts may be determined for different temperatures and stored in a lookup table in memory 201m. In this aspect, the controller 201k may receive a temperature reading from one of the temperature sensors 201n, look up phase adjusts corresponding to the temperature reading in the lookup table, and send corresponding phase adjust commands for the clock HSCLK[0] to the control interface 201g of the CMU/MUX block 201. In this aspect, one or more of the temperature sensors 201n may be located at or near the CMU/MUX block 201 or the modulator driver 203.

The phase adjust for the high-speed clock HSCLK[1] may be determined, e.g., by finding a phase adjust that provides optimal "carving" of the modulation pulses of the optical carrier signal at the pulse carver. In one aspect, a plurality of phase adjusts may be determined for different temperatures and stored in a lookup table in memory. In this aspect, the controller may receive a temperature reading from one of the temperature sensors 201n, look up phase adjusts corresponding to the temperature reading in the lookup table, and send corresponding phase adjust commands for the clock HSCLK[1] to the control interface 201g of the CMU/MUX block 201. In this aspect, one or more of the temperature sensors 201n may be located at or near the CMU/MUX block 201 or the pulse carver 207.

Figure 2e is a conceptual block diagram illustrating an example of a highspeed multiplexer architecture that may be used in the CMU/MUX block 201 in accordance with an aspect of the subject technology. In this aspect, the multiplexer comprises a tree of multiplexers 211a,b for each high-speed data lane. Each multiplexer tree 211a,b may comprise multiple stages of 2: 1 multiplexers, in which the number of 2: 1 multiplexers per stage is reduced by half in moving from one stage to the immediately following stage. Figure 2e shows the next to last stage 213a,b and the last stage 214a,b of 2:1 multiplexers in each multiplexer tree 211a,b. Thus, the data for each high-speed data lanes is multiplexed in stages with the final high-speed data lanes outputted from the multiplexer 2: 1 in the last stage 214a,b. The two high-speed data lanes outputted from the two multiplexer trees 21 l,b are then amplified by the data amplifiers 217a,b and outputted from the CMU/MUX block 201 as data lanes TXDATA[0] and TXDATA[1]. Although the high-speed multiplexer architecture is shown for CMU/MUX block 201 in Figure 2e, a similar multiplexer architecture may be used in CMU/MUX block 202.

The CMU/MUX block in Figure 2e also comprises a CMU 201 d that outputs I and Q versions of a high-speed clock. For each multiplexer tree 211a,b, the CMU/MUX block comprises a vector modulator 215a,b, a series of divide-by-2 frequency dividers 212a,b, and a FIFO buffer 216a,b. In this aspect, the I and Q versions of the high-speed clock outputted from the CMU are inputted to each vector modulator 215a,215b. Each vector modulator 215a,215b is configured to output a high-speed clock having an independently adjustable phase that is derived from a combination of the I and Q versions of the high-speed clock based on a phase-shift command PHS_ADJ[0] or PHS_ADJ[1]. Thus, each vector modulator 215a,b acts as a phase shifter that adjustably shifts the phase of the high-speed clock from the CMU 201d based on the respective phase shift command PHS ADJ[O] or PHS ADJ[1]. The phase-shifted high-speed clock from each vector modulator 215a,b is inputted to the respective series of divide-by-2 frequency dividers 212a and 212 to produce sub-harmonics of the phase-shifted clock for multiplexing operations of the multiplexer and read operations of the FIFO.

In each multiplexer tree 211a,b, the multiplexer in the last stage 214a,b is clocked using the phase-shifted clock from the respective vector modulator 215a,b. The multiplexers in the next to last stage 213a,b are clocked using the phase-shifted clock divided by two. In the immediately previous stage (not shown in Figure 2e), the phase-shifted clock is again divided by 2 and so forth. The number of 2: 1 multiplexers in the first stage of each multiplexer tree matches the number of data lanes outputted from the respective FIFO buffer 216a,b divided by two. Thus, multiplexing operations in each multiplexer tree 211a,b may be performed using an adjustable phase-shifted clock from the CMU and sub-harmonics of the phase-shifted clock. By independently adjusting the phase shifts applied to the high-speed clock by the two vector modulators 215a,b, the relative delay between the two data lanes outputted from the two multiplexer trees 211a,b may be adjusted. Thus, the two vector modulators 215a,b may be used to implement the delay adjusters 201h of the CMU/MUX block 201 shown in Figure 2a.

In this aspect, the data lanes inputted to the FIFO buffers 216a,b may be written into the FIFO buffers 216a,b from the client-side interface on a common clock. However, the data lanes outputted by each FIFO buffer 216a,b may be read out using the phase-shifted clock for the respective multiplexer tree 211a,b. In this aspect, the phase-shifted clock used to read out data from the FIFO buffer 216a,b may be frequency divided by the series of frequency dividers 212a,b to match the data rate at the input to the first stage of the multiplexer tree 211a,b.

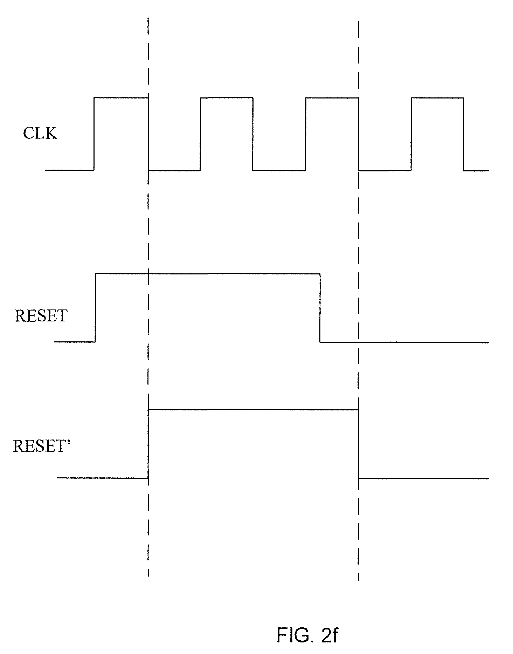

At power up of the CMU/MUX block, the divide-by-2 dividers 212a,b may have arbitrary states, which may result in data misalignment if not corrected. In one aspect, the CMU/MUX block comprises a reset unit 230 that performs a procedure for resetting the divide-by-2 dividers 212a,b to the same state. The reset unit 230 zeros out the vector modulators 215a,b so that the vector modulators output the I version of the high-speed clock. The reset unit 230 then sends a reset signal aligned with the I version of the high-speed clock to the divide-by-2 dividers 212a,b to reset the divide-by-2 dividers 212a,b to the same state. In this aspect, the reset unit 230 may receive the reset signal from an external source, align the received reset signal with the I version of the high-speed clock, and send the clock aligned reset signal to the divide-by-2 dividers 212a,b. Figure 2f shows an example of a timing diagram of a reset signal RESET inputted to the reset unit 230 and the reset signal RESET' outputted from the reset unit 230 that is aligned with the clock CLK inputted to the reset unit.

For each high-speed clock HSCLK[0] and HSCLK[1], the CMU/MUX block further comprises a vector modulator 218a,b, a full/half (F/H) rate selector 219a,b, and a clock amplifier 220a,b. Each vector modulator 218a,b applies an adjustable phase shift to the high-speed clock from the CMU 201d based on a phase adjust command PHS_ADJ[2] or PHS_ADJ[3]. Each F/H rate selector 219a,b sets the clock rate of the respective phase-shift high-speed clock to full rate or half rate based on a rate command F/H. For full rate, the clock rate selector 219a,b does not change the frequency of the phase-shifted high-speed clock. For the half rate, the clock rate selector 219a,b frequency divides the phase-shifted high-speed clock by two. The phase-shifted high-speed clocks are then amplified by the clock amplifiers 220a,b and outputted as high-speed clocks HSCLK[0] and HSCLK[1].

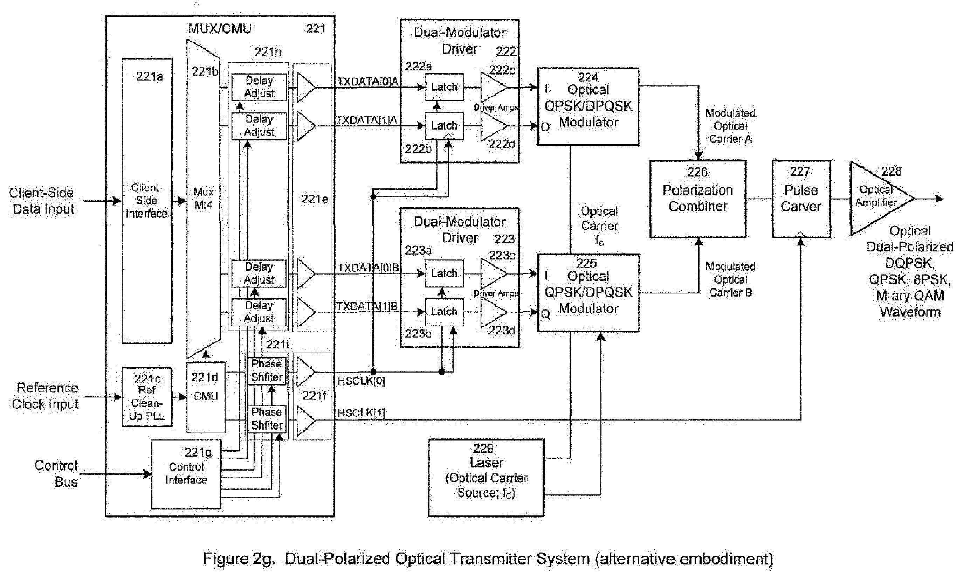

Figure 2g is a conceptual block diagram illustrating an example of a transmitter system in accordance with one aspect of the subject technology. The transmitter system comprises a CMU/MUX block 221, in which the two CMU/MUX blocks 201 and 202 in Figure 2a have been combined into a more integrated system. The CMU/MUX block 221 may be configured to receive client-side data that comprises M-lanes of digital data at a baud rate of fA, and multiplex the received client-side data into four high-speed data lanes TXDATA[0]A, TXDATA[1]A, TXDATA[0]B and
TXDATA[1]B at a baud rate of fB. The operations performed in the client-side interface 221a may be similar to the client-side interface in Figure 2a. The baud rates fA and fB in this example may the same or different from the baud rates in the example shown in Figure 2a.

In this aspect, the multiplexer 221b multiplexes the processed data from the client-side interface into four high-speed data lanes. For the example in which the client-side interface outputs NxM lanes of data to the multiplexer 221b, the multiplexer 221b may perform MxN:4 multiplexing. The CMU/MUX block 221 further comprises four delay adjusters 221h for individually applying adjustable delays to the four data lanes, and four amplifiers 221e to amplify the four data lanes into the four data lanes TXDATA[0]A, TXDATA[1]A, TXDATA[0]B and TXDATA[1]B outputted from the CMU/MUX block 221.

In this aspect, the multiplexing operations that produce the four data lanes may be performed by the M:4 multiplexer 221b using a common high-speed clock from the CMU 221d. This reduces the number of high-speed clocks that need to be distributed in the transmitter. In this aspect, the CMU/MUX block outputs one high-speed clock HSCKL[0], which is used to clock the latches 222a,b and 223a,b in both modulator drivers 222 and 223. Although shown separately in the example in Figure 2g, the two modulator drivers 222 and 223 may be integrated together. The phase of the high-speed clock HSCKL[0] may be adjusted by one of the phase shifters 221i.

In this aspect, the transmitter comprises one pulse carver 227 positioned after the polarization combiner 2261nstead of two pulse carvers positioned before polarization combiner. The CMU/MUX block 221 outputs one high-speed clock HSCLK[1] to the pulse carver 227, which is used to carve the combined optical signal and may be phase adjusted by one of the phase shifters 221i.

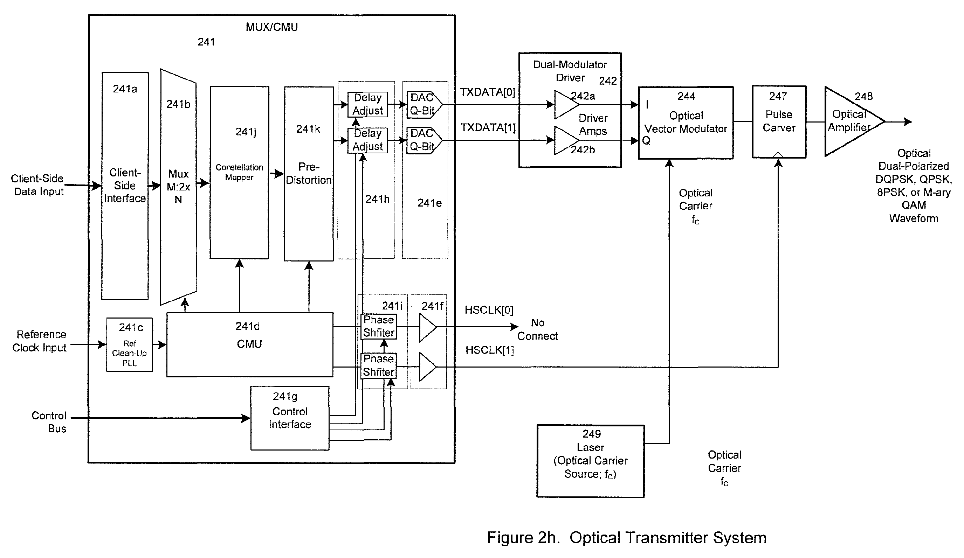

Figure 2h is a conceptual block diagram illustrating an example of a transmitter system in accordance with one aspect of the subject technology. The transmitter system in this aspect is capable of implementing a wide range of modulation schemes including, but not limited to, DQPSK and QPSK, 8-phase PSK (8PSK), and M-art QAM including 12/4-QAM, 16-QAM, 32-QAM, and 64-QAM. In this aspect, the CMU/MUX 241 comprises a constellation mapper 241j, a pre-distortion unit 241k, two delay adjusters 241h and two digital-to-analog converters DACs 241e.

The constellation mapper 241j is configured to map the lanes of data from the multiplexer 241b into an I-Q constellation based on a desired modulation scheme and outputs I and Q high-speed data word lanes, where each data word is q-bits wide.

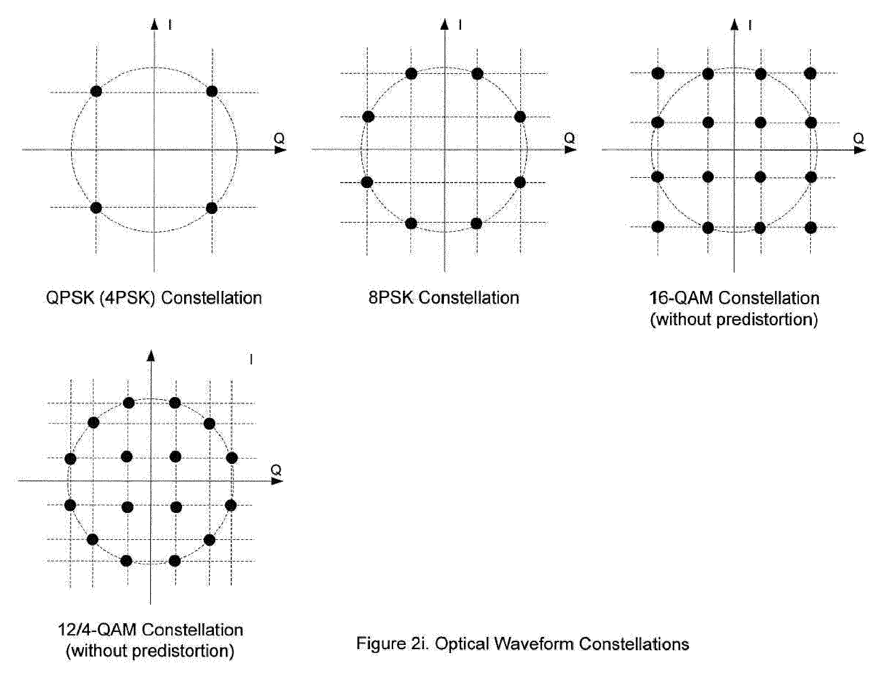

Examples of I-Q constellations for various modulation schemes are shown in Figure 2i. The I and Q data word lanes are inputted to the pre-distortion unit 241k to compensate for gain distortion (AM-to-AM compression) in the amplifiers of the modulation driver 242, as explained further below. Each I and Q data word lane may then be independently delay adjusted by one of the delay adjusters 241h, and inputted to one of the DACs 241e, where each DAC has q-bits of resolution and operates at a symbol rate of fβ. The DACs 241e output high-speed analog data signals TXDATA[0] and TXDATA[1]. Each DAC 241e converts an inputted data word into one of multiple output voltage levels depending on the resolution of the DAC. For example, each DAC 241e may convert an inputted data word into one of four voltage levels for 16-QAM modulation and one of six voltage levels for 12/4-QAM modulation. The ability of the data signals TXDATA[0] and TXDATA[0] to operate at four or more voltage levels instead of two voltage levels enables the transmitter system to use higher-order modulation schemes such as 16-QAM, and carry more bits of information per data symbol resulting in a more efficient use of channel bandwidth. The operations of the constellation mapper 241j and pre-distortion unit 241k may be timed using high-speed clocks from the CMU 241h.

The data signals TXDATA[0] and TXDATA[ 1 ] are amplified by the modulator driver 242 to provide drive signals. The drive signals are inputted to the optical vector modulator 244 to modulate one or more optical carrier signals from the laser 249. The modulated optical carrier signal is carved by the pulse carver 267, amplified by optical amplifier 248, and outputted to an optical fiber. The CMU/MUX block 241 may output a phase adjustable high-speed clock HSCLK[1] to the pulse carver 247 to perform the carving operations.

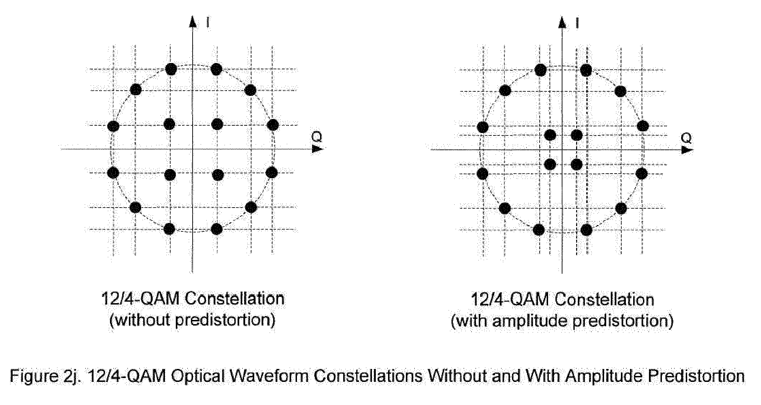

As discussed above, the pre-distortion unit 241k may pre-distort the I and Q data word lanes to compensate for gain compression (AM-AM distortion) in the amplifiers 242a,b of the modulation driver 242. In the aspect, the pre-distortion unit 241k applies the inverse of the gain compression to the data words so that the outputs of the amplifiers 242a,b are undistorted. Figure 2j depicts the use of pre-distortion for the example of a 12/4-QAM constellation to overcome gain compression in the amplifiers of the modulation driver. Figure 2j shows a pre-distorted constellation on the right in which the constellation points corresponding to lower amplitudes are moved closer to the ordinate of the constellation to allow for compression at the higher amplitudes. As a result, the gain compressions in the amplifiers convert the pre-distorted constellation in the right of Figure 2j to the more ideal constellation depicted in the left of Figure 2j.

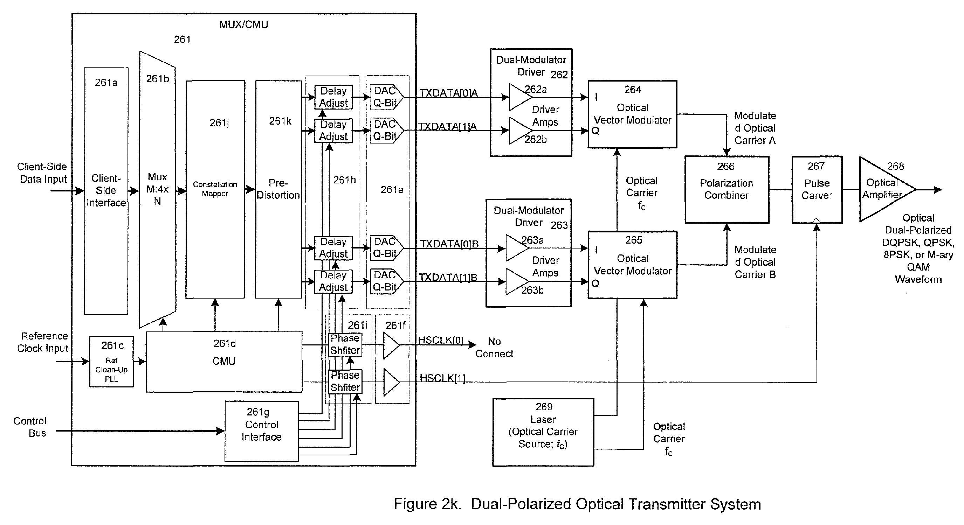

Figure 2k is a conceptual block diagram illustrating an example of a transmitter system in accordance with one aspect of the subject technology. The CMU/MUX block 261 is similar to the CMU/MUX block 241 in Figure 2h with four data signal outputs TXDATA[0]A, TXDATA[1]A, TXDATA[0]B and TXDATA[1]B instead of two data signal outputs. In this aspect, the constellation mapper 261j maps half of the lanes of data from the multiplexer into an I-Q constellation based on a desired modulation scheme and outputs I and Q high-speed data word lanes, which are converted to data outputs signals TXDATA[0]A and TXDATA[1]A by DACs 261e. Similarly, the constellation mapper maps 261j the other half of the lanes of data from the multiplexer into an I-Q constellation and outputs I and Q high-speed data word lanes, which are converted to data outputs signals TXDATA[0]B and TXDATA[1]B by DACs 261e. Similar to the previous aspect, the pre-distortion unit 261k may be used to pre-distort the I and Q data word lanes from the constellation mapper 261j to compensate for gain compression. Further, the I and Q data word lanes may be adjustably delayed by delay adjusters 261h.

Each pair of data signals TXDATA[0]A, TXDATA[1]A, TXDATA[0]B and TXDATA[1]B is amplified by the respective modulator driver 262 and 263 and inputted to the respective optical vector modulator 264 and 265 to modulate one or more optical carrier signals from the laser 269. The modulated optical carrier signals from the two optical vector modulators 264 and 265 are then combined by polarization combiner 266 into a combined optical carrier signal. The combined optical signal may then be carved by the pulse carver 267, amplified by the optical amplifier 268 and outputted to an optical fiber. The CMU/MUX block 261 may output a phase adjustable high-speed clock HSCLK[1] to the pulse carver 267 to time the pulse carving operations.

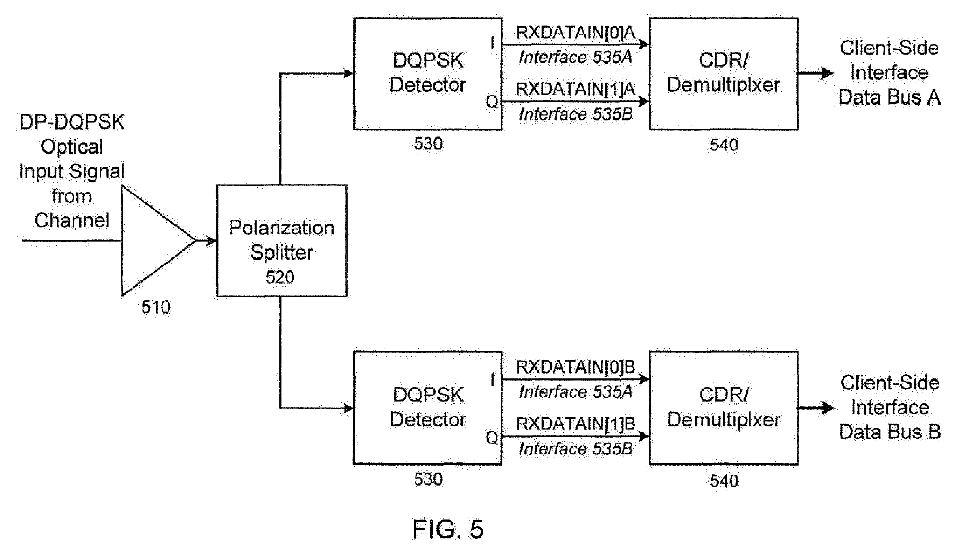

Figure 5 is a conceptual block diagram illustrating an example of a receiver in accordance with one aspect of the subject technology. The receiver in Figure 5 may perform the function of receiving and demodulating a dual-polarized DQPSK modulated optical signal. The receiver may also perform other functions including clock and data recovery, data demultiplexing, and client-side data bus framing and buffering. The receiver comprises an optical amplifier 510, a polarization splitter 520, two DQPSK detectors 530, and two CDR/Demultiplexers 540.

A dual-polarized modulated optical signal from a transmission channel (e.g., optical fiber) or from other possible stages which are fed from the transmission channel is inputted to the optical amplifier 510. The other stages may include dispersion compensation fiber, which corrects for chromatic dispersion, and may also include a polarization dispersion compensator.

Following the optical amplifier 510 the dual-polarized optical signal is provided to a polarization splitter 520 which divides the signal into two optical signals based on their polarizations. For example, if the dual-polarized optical signal comprises two orthogonally polarized optical signals, then the polarization splits the orthogonally polarized optical signals. Each optical signal is then inputted to a separate DQPSK detector 530. The DQPSK detector 530 perform two functions. First the DQPSK detector 530 splits the respective optical signal into two quadrature optical signals (I and Q optical signals). The light in each quadrature optical signal is then detected using a delay-and-mix approach (often referred to as interferometric detection) and converted into an electrical signal. This detection technique performs differential detection of each quadrature optical signal. Each of the two DQPSK detectors 530 outputs two baseband high-speed data lanes RXDATAIN[0] and RXDATAIN[1]. Each DQPSK detector 530 may include one or more photo detectors and one or more trans-impedance amplifiers (TIA's), and may be fabricated in InP, GaAs, SiGe or another suitable material(s).

The high-speed data lanes RXDATAIN[0] and RXDATAIN[ 1 ] are inputted to the CDR/Demultiplexer blocks 540. Each CDR/Demux 540 may receive one or more data such as RXDATAIN[0] and RXDATAIN[1]. Each CDR/Demultiplexer block 540 may perform clock recovery, data detection, and demultiplexing operations on the respective data lanes. Each CDR/Demultiplexer block 540 may then output client-side data on an interface bus which may undergo framing operations within the block. Each CDR/Demultiplexer block 540 may be fabricated in SiGe, CMOS, BiCMOS or any other suitable material(s).

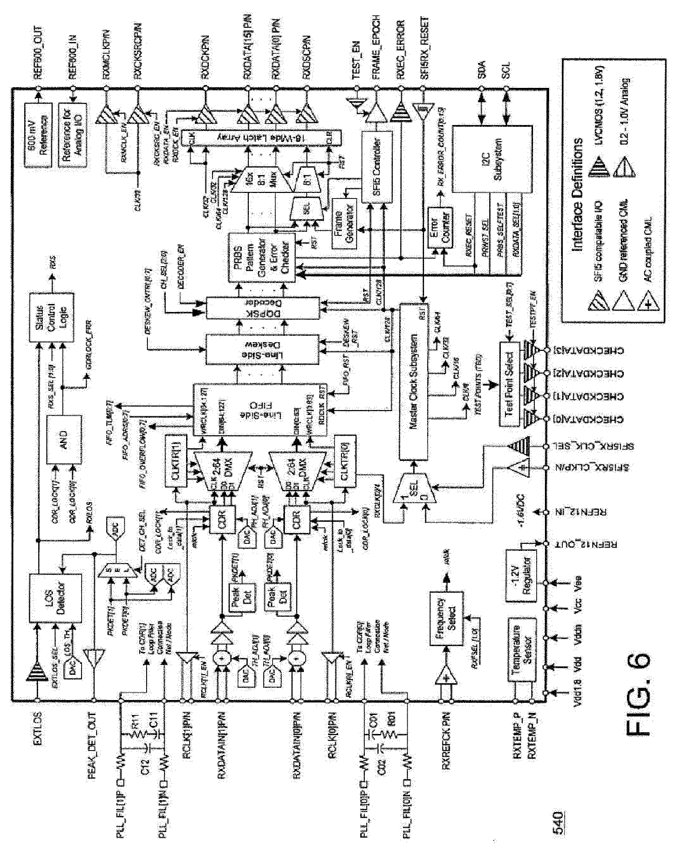

Figure 6 is a conceptual block diagram illustrating an example of a clock and data recovery (CDR) unit and demultiplexer (Demux) in accordance with one aspect of the subject technology. A CDR/Demux 540 may receive data at, for example, 30-60 Gbps (e.g., about 56 Gbps, 39 to 45 Gbps, 39 to 41 Gbps, 42 to 45 Gbps). In this example, CDR/Demux 540 uses 2 lanes; thus, the data rate of each lane is a half of the data rate of the CDR/Demux. Multiple CDR/Demux's may be utilized to increase the data rate. For example, two CDR/Demux's as shown in Figure 5 can double the data rate (e.g., to about 112 Gbps, if the data rate of a single CDR/Demux is 56 Gbps). If n-number of CDR/Demux's is utilized in parallel, then the data rate can be increased by n-times the data rate of a single CDR/Demux. In addition or alternatively, adding more lanes or channels per CDR/Demux can also increase the data rate.

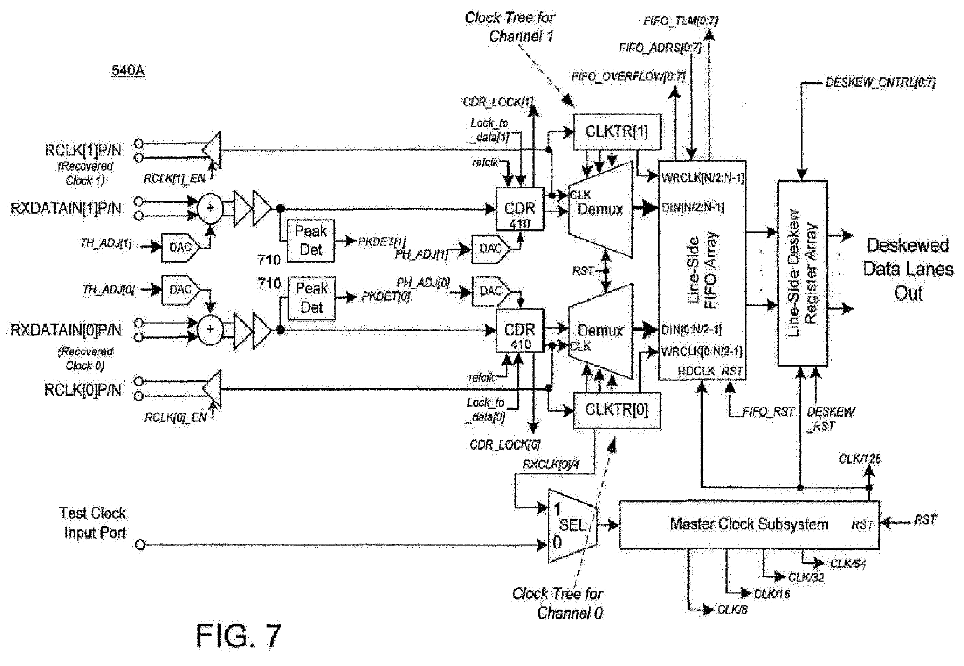

A high-speed multi-lane CDR architecture (shown in the middle-left portion of Figure 6) is illustrated in Figure 7 in detail. This CDR architecture may utilize one or more threshold adjusters (e.g., TH_ADJ[0] and TH_ADJ[0]). These can be used to adjust offset errors generated, for example, in DQPSK detectors such as DQPSK detectors 530 shown in Figure 5, which may include photo detectors and TIA's. The architecture may further include one or more peak detectors 710 that can detect whether signals are present on the optical fiber (e.g., it can monitor whether there is any breakage in the optical fiber). Peak detectors 710 can produce one or more peak detector outputs such as PKDET[0] and PKDET[1]. This architecture may further provide sampling point adjustment by utilizing, for example, one or more sampling point phase adjusters such as PH_ADJ[0] and PH_ADJ[1].

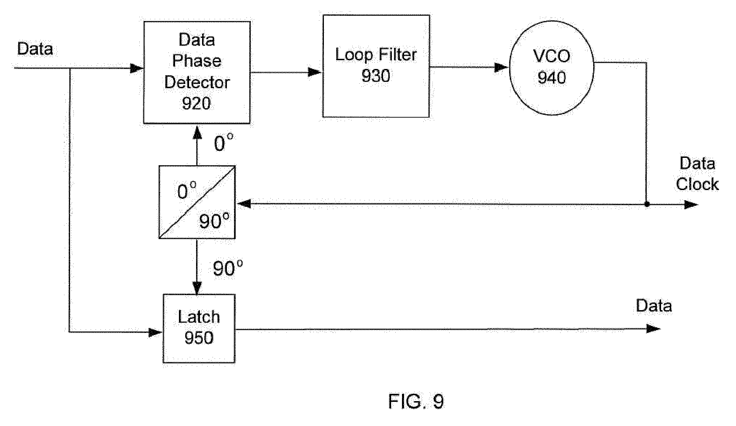

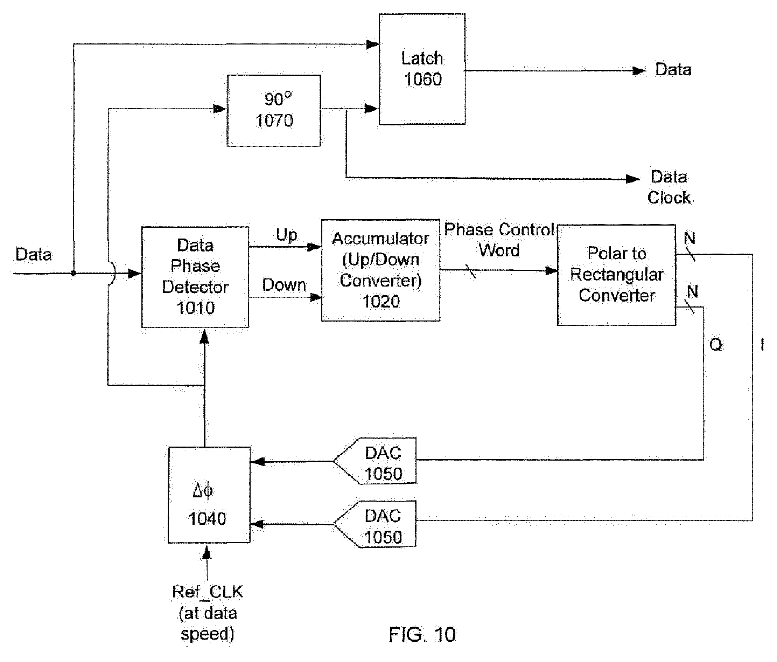

While Figure 7 is illustrated with 2 lanes (or channels), this can be expanded to n-number of lanes or channels, where n is an integer greater than 0 (e.g., 1, 2, 3, 4, 5, 8, 10, 12, etc.). In addition or alternatively, multiple CDR/MUX's can be utilized in parallel. Each of CDR' s 410 can be a voltage-controlled oscillator (VCO) based CDR (e.g., includes a VCO) or a delay-lock loop (DLL) based CDR. A VCO based CDR is illustrated in Figure 9, and a DLL based CDR is illustrated in Figure 10. A more detailed discussion of the CDRs in Figures 9 and 10 are provided below.

Figures 11-14 illustrate different examples of a transmitter (or a transmitter section) having a multi-lane interface. Each figure shows a portion of a CMLVMUX (e.g., 1 120, 1220, 1320, and 1420), a multi-lane interface (e.g., single-ended or differential channels 1, 2, ....N, which are, for example, similar to an interface 207A and 207B in Figure 2, and a single-ended or differential clock channel for a clock signal), and a driver block (e.g., 1110, 1210, 1310, and 1410). In this example, the interface includes N+1high-speed lanes.

Figure 11 illustrates a transmitter with preskew and reclocking at data sink-side according to one aspect of the subject technology. A transmitter 1101 includes CMU/MUX 1120 (only a portion thereof is shown), a multi-lane interface, and a driver block 1110. CMU/MUX 11201ncludes N data sources 1121, N 1 :N demultiplexers 1122, N elastic buffers 305, N N: l multiplexers 303, N clock phase adjusters 301, N latches 306, and N amplifiers 1 126. The data source 1 121 provides the data to be transmitted, and may comprise, e.g., the outputs of a client-side interface. The CMU/MUX 1120 further includes a clock multiplier 1127, a clock phase adjuster 1128, an amplifier 1125, and a clock divider 1129 configured to divide the clock rate by N. Driver block 1110 includes N amplifiers 1116, N latches 902 and N data sinks 903. The data sinks 903 may comprise, e.g., driver amplifiers to amplify data channels into drive signals to drive optical modulators.

The CMU/MUX 1120 may optionally include a clock divider, 1/N 1131 that divides the clock rate coming out of clock multiplier by N and provides a clock at the lower rate to each of the clock phase adjusters 301. CMU/MUX 1120 may also include a clock divider, 1, 1/N 1132, which can be programmed or selected to divide a clock rate by 1 (no change) or by N. The clock divider 1132 can be placed between the clock phase adjuster 1128 and amplifier 1125 to lower the clock rate coming out of the clock phase adjuster 1128.

In this aspect, data from the N data sources 1121 are demultiplexed by the N demultiplexers 1122 and written to the N elastic buffers 305 using a common clock (e.g., the clock from the clock multiplier 1127 divided by N). Data in each elastic buffer 305 is read out of the elastic buffer using a phase-shifted clock (e.g., the clock from the clock multiplier 1127 adjustably phase shifted by the respective phase adjuster 301), multiplexed into one data lane by the respective N: 1 multiplexer 301, latched by the respective latch 306, and amplified by the respective amplifier 1126. The phase-shifted clock for each data lane may be independently adjusted by the respective phase adjuster 301, and used to time the read operations of the respective elastic buffer 305, to time the multiplexing operations of the respective multiplexer 303, and to clock the respective latch 306. This enables the relative delay among the high-speed data lanes to be adjusted (e.g., preskewed) at the CMU/MUX, e.g., to compensate for different delays in the interface between the CMU/MUX 1120 and the driver block 1110.

The latches 902 in the driver block 1110 latch incoming data from the highspeed data lanes using a common clock (e.g., the clock sent on the high-speed clock channel from the CMU/MUX 1120 to the driver block 1101). The phase of this clock can be adjusted using phase adjuster 1128. Thus, the data from the high-speed lanes are re-clocked using a common clock at the driver block 1110.

Figure 12 illustrates a transmitter with a preskew and reclocking at the data sink-side using a clock multiplier according to one aspect of the subject technology. The transmitter in Figure 12 is similar to the one in Figure 11, but uses a low speed clock channel (and thus clock phase adjuster 1128 and amplifier 1125 are not used). In this aspect, the driver block 1210 includes a high-speed clock multiplier 1217 to multiply the clock rate of the low-speed clock channel to the data rate of the high-speed data lanes. The output clock of the high-speed clock multiplier is used to clock the latches 902 of the driver block 1210. The CMU/MUX 1220 may also optionally include a clock divider, 1/N 1231.

Figure 13 illustrates a transmitter with preskew and DLL-based CDR blocks at the data sink-side according to one aspect of the subject technology. In this aspect, the data from the N data sources are latched by latches 1305 using a common clock (e.g., clock from the clock multiplier 1327), amplified by the amplifiers 1326 and outputted on the multi-lane interface. The driver block 1310 in this aspect includes amplifiers 1310, N DLL-based CDRs 1311, N 1 :N demultiplexers 1312, N elastic buffers 1313, and N N: 1 multiplexers 1314. In this aspect, each DLL-based CDR 1311 recovers data and a data clock from the respective data lane. An example of a DLL-based CDR is provided below. The recovered data and data clock from each DLL-CDR 1311 are inputted to the respective 1 :N demultiplexer 1312 and the elastic buffer 1313, which uses the recovered data clock divided by N to write data from the 1 :N demultiplexer 1312 to the elastic buffer 1312. Thus, data is written to each elastic buffer using the respective recovered data clock. Data is read out of the elastic buffers 1313 using a common clock (e.g., the clock from the clock multiplier 1317 divided by N). Thus, the data read out from the elastic buffers are aligned with the common clock. The data from the elastic buffers are then multiplexed by the N: 1 multiplexers 1310 into N lanes of data, which are outputted to the N data sinks 1315. The N data sinks 1315 may comprise, e.g., N driver amplifiers to drive optical modulators that follow the driver block 1310.

Figure 14 illustrates a transmitter with preskew and DLL-based CDR blocks at the sink-side according to one aspect of the subject technology. The driver block in Figure 14 is similar to the one in Figure 13 with the addition of bit deskew registers 1416 between the elastic buffers 1413 and the N N: 1 multiplexers 1414. In this aspect, the bit deskew registers 1416 are used to align the data bits of the data lanes at the driver block 1410. Similar to the aspect in Figure 13, data is read from the elastic buffers 1413 using a common block (e.g., clock from the clock multiplier divided by N). Although this operation may align the data lanes with same clock, the data bits in the data lanes may still be misaligned by one or more Unit Intervals (UIs). In this aspect, the bit deskew registers 1416 shift the data bits of the data lanes into alignment.

In one aspect, the data bits of the data lanes may be aligned at the driver block 1410 by periodically sending a framing pattern on the data lanes from the CMU/MUX 1420 to the driver block 1410, in which the framing buffer is known at the driver block 1410. Since the framing pattern is known, the deskew controller can determine the bit misalignments at the driver block 1410 by comparing the received framing pattern at the driver block 1410 with the known framing pattern. After determining the bit misalignment for each data lane, the deskew controller can command each bit deskew register 1416 to shift the data bits of the respective data lane by an amount that aligns its data bits with the data bits of the other data lanes. An advantage of this aspect is that it does not require an additional data lane between the CMU/MUX 1420 and the driver block 1410 since the framing pattern is periodically sent on the existing data lanes.

In another aspect, the data bits of the data lanes may be aligned by adding a reference lane (not shown) from the CMU/MUX 1420 to the driver block 1410, in which the reference lane comprises samples from each of the high-speed data lanes. In this aspect, the deskew controller can correlate each data lane with the corresponding sample of the data lane from the reference lane to determine the bit misalignment of the data lane. After determining the bit misalignment for each data lane, the deskew controller can command each bit deskew register to shift the data bits of the respective data lane by an amount that aligns its data bits with the data bits of the other data lanes. An advantage of this aspect is that it does not require periodically sending a framing pattern on the data lanes, which may reduce data bandwidth.

Each of the configurations has its benefits and potential issues to consider. The benefit of the architecture shown in Figure 11 is that deterministic jitter due to data channel distortion can be eliminated by sink-side reclocking. Potential issues to consider are that it uses an additional high-speed channel for clock (power & package size impact), it may not be able to handle significant wander between channels, and the lack of bit deskew can limit the amount of allowable skew to less than 1 UI interfaces baud-rate.

The benefits of the architecture shown in Figure 12 may be that deterministic jitter due to data channel distortion can be eliminated by sink-side reclocking and that it does not use an additional high-speed clock channel (just lower speed clock). Potential issues to consider are that increased wander of clock path relative to data paths at data sink latches may be an issue, it needs a high-speed clock-multiplier unit at sink-side, and the lack of bit deskew may limit the amount of allowable skew to less than 1 UI interfaces baud-rate.

The benefits of the architecture shown in Figure 13 may be that deterministic jitter due to data channel distortion can be eliminated by sink-side reclocking, it does not use an additional high-speed clock channel (just lower speed clock), and it can accommodate data and reference clock/CMU wander. Potential issues to consider are that it uses a high-speed clock-multiplier unit (e.g., 1317) as well as a DLL-based CDR (e.g., 1311), and an elastic buffer (FIFO) (e.g., 1313) for each channel (or lane) at sink-side (power consumption), and that the lack of bit deskew may limit the amount of allowable skew to less than 1 UI interfaces baud-rate.

The benefits of the architecture shown in Figure 14 may be that deterministic jitter due to data channel distortion can be eliminated by sink-side reclocking, it does not need an additional high-speed clock channel (just lower speed clock), and it can accommodate data and reference clock/CMU wander. A potential issue to consider is that it uses a high-speed clock-multiplier unit (e.g., 1417) as well as a DLL-based CDR (e.g., 1411), an elastic buffer (FIFO) (e.g., 1413) and a deskew register (e.g., 1416) for each lane at sink-side (power consumption).

Figure 9 illustrates an example of a VCO based CDR according to one aspect of the subject technology. The CDR comprises a phase detector 920, a loop filter 930, and a VCO 940. The VCO 940 outputs a clock having a voltage-controlled frequency. The clock is feed back to the phase detector 920, which compares the phase of the clock with the phase of the incoming data. The phase detector 920 then outputs a control signal that is a function of the phase error between the clock and the data. The control signal is filtered by the loop filter 930 and inputted to the VCO to control the frequency of the clock. The control signal either increases or decreases the frequency of the clock based on the direction that reduces the phase error between the clock and the data, and thus synchronizes the clock with the data.

The VCO based CDR also include a latch 950 that latches the data using the clock from the VCO 940 shifted 90 degrees. The clock is shifted by 90 degrees in order to sample the data bits of the incoming data at mid bit instead of on the edges of the data bits. The clock may be adjustably shifted by other phase shifts, e.g., depending on the phase shift that provides optimal sampling of the data bits of the incoming data. The latch 950 outputs the data of the VCO based CDR. The data clock may be the clock outputted from the VCO 940 or the clock outputted from the VCO 940 shifted 90 degrees (clock used to latch data). The VCO based CDR shown in Figure 9 may be used to implement any of the CDRs mentioned above.

Figure 10 illustrates an example of a DLL based CDR according to one aspect of the subject technology. The CDR comprises a phase detector 1010, an accumulator 1020, a polar to rectangular converter 1030, and a phase adjuster 1040. The phase adjuster 1040 shifts the phase of a reference clock running at full data rate. The phase detector 1010 compares the phase of the incoming data with the phase of the phase-shifted reference clock. The phase detector 1010 outputs an up signal or a down signal depending on whether the phase of the phase-shifted reference clock leads or lags the phase of the data. The accumulator 1020 accumulates the up and down signals and outputs a phase control word based on the accumulated up and down signals. The polar to rectangular converter 1030 converts the phase control word into an in-phase (I) component and a quadrature (Q) component. The I and Q components of the phase control are converted into analog signals by digital-to-analog converters (DACs) 1050 and inputted to the phase adjuster 1040, which shifts the phase of the reference clock based on the phase control. The phase adjuster 1040 shifts the phase of the reference clock in a direction that reduced the phase error between the reference clock and the data, and thus synchronizes the reference clock with the data.

The DLL based CDR also include a latch 1060 that latches the data using the clock from the phase adjuster 1040 shifted 90 degrees by phase shifter 1070. The clock may be adjustably shifted by other phase shifts, e.g., depending on the phase shift that provides optimal sampling of the data bits of the incoming data. The latch 1060 outputs the data of the DLL based CDR. The data clock may be the clock outputted from the phase adjuster 1040 or the clock outputted from the phase adjuster 1040 shifted 90 degrees (clock used to latch data). The DLL based CDR shown in Figure 10 may be used to implement any of the CDRs mentioned above.

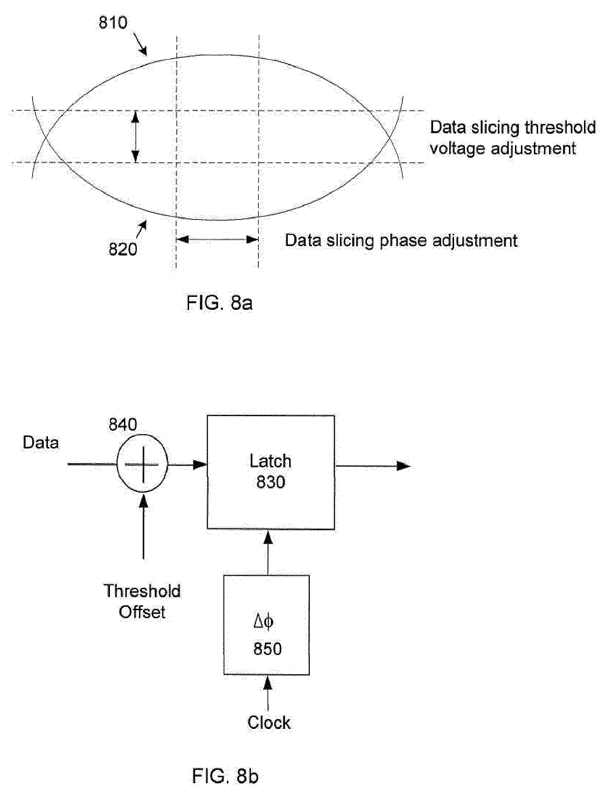

Figure 8a shows an exemplary data eye pattern according to one aspect of the subject technology. The data eye pattern provides useful information for selecting an optimal sampling point at which to sample data bits from a data lane. The data eye pattern may be generated by superimposing ones 810 and zeroes 820 from a data lane that has passed through a K-th order low-pass filter where K is one or more. This low-pass filtering is similar to the distortion that occurs as the signal is passed through the communication channel and results in analog waveforms similar to the one shown in Figure 8a. Figure 8 shows an example of an undistorted symmetrical data eye pattern, in which the optimal sampling point may be in the center of the eye. For a distorted asymmetrical data eye, the threshold and/or phase of the sampling point may need to be adjusted to provide optimal data sampling.

Figure 8b shows an example of a latch 830 with an adjustable threshold and an adjustable phase. The adjustable threshold is provided by an adder 840, which adds an adjustable offset (e.g., D.C. voltage) to the data to adjust the threshold at which the latch 830 determines whether a data bit is a one or a zero. The adjustable phase is provided by a phase adjuster 850 which adjustably shifts the phase of the clock input to the latch 830 based on a phase adjust command. The system shown in Figure 8b may be used for any of the latches mentioned above to provide adjustable thresholds and phases for the latches. For latches in a drive modulator, the adjustable phase shift of the clock may be provided by the phase shifters in the CMU/MUX block.

As used herein, the term "couple" may refer to a direct or indirect coupling (e.g., coupling through one or more other elements). When an element performs a function on a signal (e.g., a data channel(s)), the signal may be a direct or indirect input signal of the element.

The subject technology has been described with particular illustrative configurations. It is to be understood that the subject technology is not limited to the above-described configurations and that various changes and modifications may be made by those of ordinary skill in the art without departing from the scope of the subject technology. For example, while certain frequencies have been referenced as an illustration, the subject technology is not limited to those frequencies and may utilize other frequencies. Further, while certain data rates have been described as an illustration, the subject technology is not limited to those data rates and may utilize other data rates.

In the following concepts are described.
1. A communication system, comprising:
   a multiplexer configured to multiplex a first set of data channels into a first data channel and to multiplex a second set of data channels into a second data channel;
   a delay adjuster coupled to the multiplexer and configured to adjustably delay the first data channel based on a delay adjust command;
   a first amplifier coupled to the delay adjuster and configured to amplify the delayed first channel into a first output data channel;
   a first driver coupled to the first amplifier and configured to convert the first output data channel into a first drive signal to drive an optical modulator configured to modulate one or more optical signals;
   a second amplifier coupled to the multiplexer and configured to amplify the second data channel into a second output data channel; and
   a second driver coupled to the second amplifier and configured to convert the second output data channel into a second drive signal to drive the optical modulator.
2. The communication system of concept 1, further comprising an encoder configured to encode data based on Quadrature Phase Shift Keying (QPSK) modulation or differential QPSK modulation, wherein the first and second sets of data channels comprise the encoded data.
3. The communication system of concept 2, wherein the encoded data includes In-phase (I) encoded data and Quadrature (Q) encoded data, and the first set of data channels comprise the I encoded data and the second set of data channels comprise the Q encoded data.
4. The communication system of concept 1, further comprising a second delay adjuster coupled to the multiplexer and the second amplifier and configured to adjustably delay the second data channel based on a second delay command, wherein the second data channel amplified by the second amplifier is an output of the second delay adjustor.
5. The communication system of concept 1, further comprising:
   a phase adjuster configured to adjustably phase shift a first clock based on a phase adjust command; and
   a clock amplifier coupled to the phase adjuster and configured to amplify the phase-shifted first clock into a first output clock.
6. The communication system of concept 5, wherein the first driver comprises a first latch configured to latch the first output data channel based on the first output clock and the second driver comprises a second latch configured to latch the second output data channel based on the first output clock.
7. The communication system of concept 5, wherein the delay adjuster comprises:
   a second phase adjuster configured to adjustably phase shift a second clock based on a second phase adjust command; and
   at least one frequency divider coupled to the second phase adjuster and configured to frequency divide the phase-shifted second clock into one or more sub-harmonic clocks,
   wherein the multiplexer is configured to time multiplex operations for the first set of data channels based on the one or more sub-harmonic clocks.
8. The communication system of concept 7, wherein the multiplexer comprises a First-In-First-Out (FIFO) buffer configured to temporarily store data and to read out the stored data as the first set of data channels based on one of the sub-harmonic clocks.
9. The communication system of concept 5, further comprising:
   a second phase adjuster configured to adjustably phase shift a second clock based on a second phase adjust command; and
   a second clock amplifier coupled to the second phase adjuster and configured to amplify the phase-shifted second clock into a second output clock.
10. The communication system of concept 9, further comprising:
   the optical modulator coupled to the first and second drivers and configured to modulate an optical signal based on the first and second drive signals; and
   a pulse carver coupled to the optical modulator and configured to carve the modulated optical signal based on the second output clock.
11. The communication system of concept 10, further comprising a duty cycle adjuster configured to adjust a duty cycle of the phase-shifted second clock based on a duty cycle adjust command.
12. The communication system of concept 1, further comprising:
   the optical modulator coupled to the first and second drivers and configured to modulate an optical signal based on the first and second drive signals; and
   a polarization combiner configured to combine the modulated optical signal with a second modulated optical signal into a combined optical signal.
13. The communication system of concept 12, further comprising a pulse carver configured to carve the combined modulated optical signal.
14. The communication system of concept 13, further comprising:
   a phase adjuster configured to adjustably phase shift a first clock based on a phase adjust command; and
   a clock amplifier coupled to the phase adjuster and configured to amplify the phase-shifted first clock into a first output clock,
   wherein the pulse carver carves the combined modulated optical signal based on the first output clock.
15. A communication system, comprising:
   a multiplexer configured to multiplex a first set of data channels into a first data channel and to multiplex a second set of data channels into a second data channel;
   a constellation mapper configured to map the first and second data channels to an In-phase (I) - Quadrature (Q) constellation and to output an I data channel and a Q data channel based on the mapping;
   a delay adjuster configured to adjustably delay the I data channel based on a delay adjust command;
   a first digit-to-analog converter (DAC) configured to convert the delayed I data channel into a first analog data signal;
   a second DAC configured to convert the Q data channel into a second analog data signal;
   a first driver configured to convert the first analog data signal into a first drive signal to drive an optical modulator configured to modulate one or more optical signals; and
   a second driver configured to convert the second output data channel into a second drive signal to drive the optical modulator.
16. The communication system of concept 15, wherein the constellation mapper is configured to map the first and second data channels to the I-Q constellation based on 8 Phase Shift Keying (8PSK) modulation, 16 Quadrature Amplitude Modulation 16-QAM or 12/4-QAM.
17. The communication system of concept 15, wherein the I-Q constellation comprises at least four I amplitude levels.
18. The communication system of concept 15, wherein the I-Q constellation comprises at least four Q amplitude levels.
19. The communication system of concept 15, further comprising a predistortion unit coupled between the constellation mapper and the first DAC and configured to predistort the I data channel to compensate for gain compression in the first driver.
20. The communication system of concept 15, further comprising a second delay adjuster coupled to the constellation mapper and the second DAC and configured to adjustably delay the Q data channel based on a second delay adjust command, wherein the Q data channel amplified by the second amplifier is an output of the second delay adjustor
21. The communication system of concept 15, further comprising:
   a phase adjuster configured to adjustably phase shift a first clock based on a first phase adjust command; and
   a first clock amplifier coupled to the phase adjuster and configured to amplify the phase-shifted first clock into a first output clock.
22. The communication system of concept 21, further comprising:
   the optical modulator coupled to the first and second drivers and configured to modulate an optical signal based on the first and second drive signals; and
   a pulse carver coupled to the optical modulator and configured to carve the modulated optical signal based on the first output clock.
23. The communication system of concept 22, further comprising a duty cycle adjuster configured to adjust a duty cycle of the phase-shifted first clock based on a duty cycle adjust command.
24. The communication system of concept 15, further comprising:
   the optical modulator coupled to the first and second drivers and configured to modulate an optical signal based on the first and second drive signals; and
   a polarization combiner configured to combine the modulated optical signal with a second modulated optical signal into a combined optical signal.
25. The communication system of concept 24, further comprising a pulse carver configured to carve the combined modulated optical signal.
26. The communication system of concept 25, further comprising:
   a phase adjuster configured to adjustably phase shift a first clock based on a phase adjust command; and
   a clock amplifier coupled to the phase adjuster and configured to amplify the phase-shifted first clock into a first output clock,
   wherein the pulse carver carves the combined modulated optical signal based on the first output clock.
27. A communication device, comprising:
   an interface configured to receive input data channels and convert the input data channels into a first set of data channels and a second set of data channels;
   a multiplexer configured to multiplex a first set of data channels into the first data channel and to multiplex the second set of data channels into a second data channel;
   a delay adjuster coupled to the multiplexer and configured to adjustably delay the first data channel based on a delay adjust command;
   a first amplifier coupled to the delay adjuster and configured to amplify the delayed first channel into a first output data channel;
   a second amplifier coupled to the multiplexer and configured to amplify the second channel into a second output data channel;
   a phase adjuster configured to adjustably phase shift a first clock based on a phase adjust command; and
   a clock amplifier configured to amplify the phase-shifted first clock into a first output clock.
28. The communication device of concept 27, wherein the interface comprises a Serdes Framer Interface (SFI) circuit configured to perform clock synchronization and deskew functions on the input data channels.
29. The communication device of concept 27, further comprising a second delay adjuster coupled to the multiplexer and the second amplifier and configured to adjustably delay the second data channel based on a second delay command, wherein the second data channel amplified by the second amplifier is an output of the second delay adjustor.
30. The communication device of concept 27, further comprising:
   a second phase adjuster configured to adjustably phase shift a second clock based on a phase adjust command; and
   a clock amplifier configured to amplify the phase-shifted second clock into a second output clock.
31. The communication device of concept 27, wherein the delay adjuster comprises:
   a second phase adjuster configured to adjustably phase shift a second clock based on a second phase adjust command; and
   at least one frequency divider coupled to the second phase adjuster and configured to frequency divide the phase-shifted second clock into one or more sub-harmonic clocks,
   wherein the multiplexer is configured to time multiplex operations for the first set of data channels based on the one or more sub-harmonic clocks.
32. The communication device of concept 31, wherein the multiplexer comprises a First-In-First-Out (FIFO) buffer configured to temporarily store data and to read out the stored data as the first set of data channels based on one of the sub-harmonic clocks.
33. The communication device of concept 27, further comprising a clock multiplier configured to convert a reference clock into the first clock.

## Claims

1. A communication system, comprising:
a multiplexer configured to multiplex a first set of data channels into a first data channel and to multiplex a second set of data channels into a second data channel;
a constellation mapper configured to map the first and second data channels to an In-phase (I) - Quadrature (Q) constellation and to output an I data channel and a Q data channel based on the mapping;
a delay adjuster configured to adjustably delay the I data channel based on a delay adjust command;
a first digit-to-analog converter (DAC) configured to convert the delayed I data channel into a first analog data signal;
a second DAC configured to convert the Q data channel into a second analog data signal;
a first driver configured to convert the first analog data signal into a first drive signal to drive an optical modulator configured to modulate one or more optical signals; and
a second driver configured to convert the second analog data signal into a second drive signal to drive the optical modulator.

2. The communication system of claim 1, wherein the constellation mapper is configured to map the first and second data channels to the I-Q constellation based on 8 Phase Shift Keying (8PSK) modulation, 16 Quadrature Amplitude Modulation 16-QAM or 12/4-QAM.

3. The communication system of claim 1, wherein the I-Q constellation comprises at least four I amplitude levels.

4. The communication system of claim 1, wherein the I-Q constellation comprises at least four Q amplitude levels.

5. The communication system of claim 1, further comprising a predistortion unit coupled between the constellation mapper and the first DAC and configured to predistort the I data channel to compensate for gain compression in the first driver.

6. The communication system of claim 1, further comprising a second delay adjuster coupled to the constellation mapper and the second DAC and configured to adjustably delay the Q data channel based on a second delay adjust command, wherein the Q data channel amplified by a second amplifier is an output of the second delay adjustor.

7. The communication system of claim 1, further comprising:
a phase adjuster configured to adjustably phase shift a first clock based on a first phase adjust command; and
a first clock amplifier coupled to the phase adjuster and configured to amplify the phase-shifted first clock into a first output clock.

8. The communication system of claim 7, further comprising:
the optical modulator coupled to the first and second drivers and configured to modulate an optical signal based on the first and second drive signals; and
a pulse carver coupled to the optical modulator and configured to carve the modulated optical signal based on the first output clock.

9. The communication system of claim 8, further comprising a duty cycle adjuster configured to adjust a duty cycle of the phase-shifted first clock based on a duty cycle adjust command.

10. The communication system of claim 1, wherein the optical modulator is coupled to the first and second drivers and configured to modulate an optical signal based on the first and second drive signals.

11. The communication system of claim 10, further comprising a polarization combiner configured to combine the modulated optical signal with a second modulated optical signal into a combined optical signal.

12. The communication system of claim 11, further comprising a pulse carver configured to carve the combined modulated optical signal.

13. The communication system of claim 12, further comprising:
a phase adjuster configured to adjustably phase shift a first clock based on a phase adjust command; and
a clock amplifier coupled to the phase adjuster and configured to amplify the phase-shifted first clock into a first output clock,
wherein the pulse carver carves the combined modulated optical signal based on the first output clock.

14. The communication system of claim 1, wherein the delay adjuster comprises:
a second phase adjuster configured to adjustably phase shift a second clock based on a second phase adjust command; and
at least one frequency divider coupled to the second phase adjuster and configured to frequency divide the phase-shifted second clock into one or more sub-harmonic clocks,
wherein the multiplexer is configured to time multiplex operations for the first set of data channels based on the one or more sub-harmonic clocks.

15. The communication system of claim 14, wherein the multiplexer comprises a First-In-First-Out (FIFO) buffer configured to temporarily store data and to read out the stored data as the first set of data channels based on one of the one or more sub-harmonic clocks.
